# EUROPÄISCHE PATENTSCHRIFT

(11) **EP 3 220 163 B1**
(45) Veröffentlichungstag und Bekanntmachung des Hinweises auf die Patenterteilung: **07.07.2021**
(21) Anmeldenummer: 16160434.3
(22) Anmeldetag: 15.03.2016
(51) Int. Cl.: G01S 17/10, G01S 17/32, G01S 17/42, G01S 17/66, G01S 17/87, G01S 7/481

(54) **LASERTRACKER MIT ZWEI MESSFUNKTIONALITÄTEN**
LASER TRACKER WITH TWO MEASURING FUNCTION ALITIES
APPAREIL DE SUIVI LASER À DEUX FONCTIONNALITÉS DE MESURE

(43) Veröffentlichungstag der Anmeldung: 20.09.2017
(73) Patentinhaber: Leica Geosystems AG, 9435 Heerbrugg (CH)
(72) Erfinder: LÜTHI, Thomas, 5000 Aarau (CH); MAKSIMOVIC, Veroljub, 4562 Biberist (CH)
(74) Vertreter: Kaminski Harmann

(56) Entgegenhaltungen:
- EP-A1- 2 589 982
- EP-A1- 2 827 099
- WO-A1-2007/079600

## Beschreibung

Die Erfindung betrifft einen Lasertracker zur industriellen koordinativen Positionsbestimmung eines Ziels mit einer optischen Distanzmesseinheit nach Anspruch 1 und ein Verfahren zum koordinativen Positionsbestimmen nach Anspruch 13.

Lasertracker werden zur industriellen Vermessung eingesetzt, z.B. zur koordinativen Positionsbestimmung von Punkten eines Bauteils wie einem Fahrzeugrumpf beispielsweise im Rahmen einer Inspektion oder zur fortlaufenden Positionsüberwachung eines sich bewegenden Maschinenteils. Derartige Lasertracker sind ausgebildet für eine koordinative Positionsbestimmung dieses Zielpunkts und üblicherweise für eine fortlaufende Verfolgung eines retroreflektierenden Zielpunkts. Ein Zielpunkt kann dabei durch eine retroreflektierende Einheit (z. B. Würfelprisma) repräsentiert sein, die mit einem von einer Strahlquelle des Messgeräts bzw. der Messvorrichtung erzeugten optischen Messstrahl, insbesondere einem Laserstrahl, angezielt wird. Der Laserstrahl wird parallel zurück zur Messvorrichtung reflektiert, wobei der reflektierte Strahl mit Erfassungsmitteln der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z. B. mittels Laufzeit- oder Phasendifferenzmessung oder mittels des Fizeau-Prinzips ermittelt. Anhand der Emissions- bzw. Empfangsrichtung und der Distanz werden die Positionskoordinaten des Zielpunkts bestimmt.

Zur Entfernungsmessung weisen Lasertracker des Standes der Technik zumindest einen Distanzmesser auf, wobei dieser z. B. als Interferometer (IFM) ausgebildet sein kann. Da solche Entfernungsmesser nur relative Distanzänderungen messen können, werden zum Bestimmen eines absoluten Distanzwerts in heutigen Lasertrackern so genannte Absolutdistanzmesser (ADM) verbaut. Eine Kombination eines Absolutdistanzmessers und eines Interferometers zur Entfernungsbestimmung ist beispielsweise aus der WO 2007/079600 A1 bekannt.

EP-A-2827099 offenbart einen Lasertracker zur fortlaufenden Verfolgung eines reflektierenden Ziels und zur Positionsbestimmung des Ziels mit einem eine Stehachse definierenden Sockel, einer Strahllenkeinheit zur Emission einer Messstrahlung, wobei die Strahllenkeinheit um die Stehachse und eine Neigungsachse relativ zur Sockel motorisiert schwenkbar ist und durch eine Emissionsrichtung der Messstrahlung eine Messachse definiert ist. Ferner mit einer Feindistanzmesseinheit zur präzisen Distanzbestimmung zum Ziel, einer Winkelmessfunktionalität zur Bestimmung einer Ausrichtung der Strahllenkeinheit relativ zum Sockel und einer Zielsucheinheit. Die Zielsucheinheit weist Beleuchtungsmittel zur Beleuchtung des Ziels, eine Kamera mit einem positionssensitiven Detektor zur positionsbestimmenden Erfassung von vom Ziel reflektierter Beleuchtungsstrahlung und eine Steuerungs- und Auswerteeinheit mit Suchfunktionalität zum Auffinden des Ziels auf. Bei Ausführung der Suchfunktionalität erfolgt ein Auffinden des Ziels durch Bestimmen eindeutiger Zielpositionsinformation anhand von detektierten Positionen reflektierter Beleuchtungsstrahlung , je nach Ausführungsform unter Berücksichtung weiterer Zielpositionsinformationen, derart, dass Messstrahlung direkt auf das Ziel ausrichtbar ist.

Ausserdem wird in modernen Trackersystemen auf einem Feinanzielsensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Feinanzielsensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der Zielpunkt bzw. der Retroreflektor kann dabei an einem Messhilfsinstrument angebracht sein, z.B. ein sogenanntes Tastwerkzeug, das mit einem Kontaktpunkt auf einem Punkt des zu vermessenden Objekts positioniert wird. Das Tastwerkzeug weist Markierungen, z. B. Lichtpunkte, und einen Reflektor auf, der den Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind.

Nicht möglich mit gewöhnlichen Lasertrackern des Stands der Technik ist die Messung von Entfernungen ohne den Einsatz von einen Retroreflektor aufweisenden Messhilfsmitteln, d. h. ein Messen direkt zu einer Oberfläche eines zu vermessenden Objektes. Vor allem ist mit derartigen Lasertrackern kann scannendes Vermessen von Oberflächenpunkten möglich, also ein Bestimmen von sehr vielen Punktkoordinaten, was in vergleichsweise kurzer Zeit erfolgt. Hierfür müssen allerdings im Vergleich zum Vermessen retroreflektierender Ziele Genauigkeitseinbussen in Kauf genommen werden.

Die US 2014/0226145 A1 offenbart einen Lasertracker, der sowohl ein retroreflektierendes Ziel als auch eine natürliche (also nicht-retroreflektierende) Oberfläche vermessen kann. Hierzu weist der Lasertracker einen ersten Absolutdistanzmesser auf, der wie bekannt ausgebildet ist zum Messen zu einem Retroreflektor. Zusätzlich weist der Lasertracker einen zweiten ADM auf, der ausgebildet ist zum Messen zu einer Objektoberfläche. Die jeweiligen ADM senden zwar ihre Messstrahlung durch eine einzige Austrittsoptik, sind aber jeweils getrennte, unabhängige Einheiten. Die Notwendigkeit, zwei völlig eigenständige, separate Absolutdistanzmesser bereitzustellen, ist nachteilig produktionstechnisch aufwändig und damit teuer.

Es ist daher Aufgabe der vorliegenden Erfindung, einen verbesserten Lasertracker bereitzustellen.

Weiterhin ist es eine Aufgabe, einen solchen Lasertracker bereitzustellen, welcher die Vermessung sowohl zu einem retroreflektierenden Ziel als auch einem diffus streuenden Ziel ermöglicht mit verbessertem Aufbau bzw. verringertem konstruktiven Aufwand.

Eine weitere Aufgabe der Erfindung ist es, ein verbessertes Verfahren zum industriellen koordinativen Positionsbestimmen bereitzustellen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Lasertracker zur industriellen koordinativen Positionsbestimmung eines Ziels. Der Lasertracker weist mindestens eine Basis, eine Steuer- und Auswerteeinheit zur Datenverarbeitung und zur Steuerung des Lasertrackers auf. Weiter weist der Lasertracker eine Strahllenkeinheit auf, die um zwei Achsen relativ zur Basis drehbar ist und eine Aussende- und Empfangsoptik zum Aussenden von Licht als Messstrahlung auf das Ziel und zum Empfangen von Messstrahlungsreflexion aufweist. Weiter weist der Lasertracker Mittel zum Erfassen von Drehwinkeln der Strahllenkeinheit relativ zur Basis auf. Zudem weist der Lasertracker eine optische Distanzmesseinheit auf, mittels derer zur koordinativen Positionsbestimmung eine absolute Distanz zum Ziel bestimmbar ist. Anhand der erfassten Drehwinkel und der bestimmten absoluten Distanz ist die Position des Ziels bestimmbar. Die optische Distanzmesseinheit weist mindestens folgende Elemente auf:
eine erste Strahlquelle, vorzugsweise eine Superlumineszenz-LED (SLED) oder Laserquelle, zur Erzeugung einer ersten Messstrahlung, und eine erste Detektionseinheit zur Detektion empfangener Messstrahlungsreflexion. Unter einem Element wird dabei ein Bauteil verstanden, das eine bestimmte übergeordnete Funktion erfüllt wie z.B. die Detektion von Messstrahlung oder die Erzeugung von Messstrahlung. Ein solches Element oder Bauteil kann dabei aus einzelnen Komponenten oder Unterelementen bestehen, die als Bauteilgruppe die übergeordnete Funktion verwirklichen. So kann z.B. die Strahlquelle mehrere jeweils lichterzeugende Komponenten aufweisen, also z.B. zwei Teilelemente, die jeweils für sich Licht generieren und in Zusammenwirkung -z.B. durch Zusammenführung, Überlagerung oder abwechselndem Einsatzinsgesamt die erste Messstrahlung erzeugen oder bilden. Unter Licht wird nicht nur Strahlung im sichtbaren Bereich des Spektrums verstanden, sondern Strahlung z.B. auch im Infrarotbereich. Beispielsweise wird als Messstrahlung Licht verwendet mit einer Frequenz von bzw. in einem Frequenzbereich um 650, 750, 795, 800, 830, 840, 850, 905, 1270, 1300, 1330, 1400 oder 1550nm.

Erfindungsgemäss sind die Steuer- und Auswerteeinheit und die optische Distanzmesseinheit ausgebildet zur Durchführung einer erster und einer zweiten Messfunktionalität. Hierzu ist wenigstens ein Element der Distanzmesseinheit zur dualen Verwendung sowohl in der ersten als auch in der zweiten Messfunktionalität ausgebildet. Anders formuliert wird wenigstens ein Bestandteil der Distanzmesseinheit im Rahmen der ersten und der zweiten Messfunktionalität eingesetzt, wohingegen optional andere Bestandteile der Distanzmesseinheit nur in der ersten oder nur in der zweiten Messfunktionalität verwendet werden. Dabei ist die Distanzmesseinheit in einer integrierten Bauweise ausgeführt, so dass die Elemente fester Bestandteil der Distanzmesseinheit sind. Die beiden Messfunktionalitäten sind spezialisiert für zwei verschiedene Arten des zu vermessenden Ziels: die erste Messfunktionalität ist ausgebildet zur koordinativen Positionsbestimmung eines retroreflektierenden Ziels und die zweite Messfunktionalität zur koordinativen Positionsbestimmung eines diffus streuenden Ziels. Mit anderen Worten erfolgt die koordinative Positionsbestimmung des Ziels bei Vorliegen eines kooperativen Ziels mit der ersten Messfunktionalität und die koordinative Positionsbestimmung des Ziels bei Vorliegen eines diffus streuenden Ziels wie z.B. einer Objektoberfläche mit der zweiten Messfunktionalität, wofür die Steuer- und Auswerteeinheit und die Distanzmesseinheit speziell ausgebildet sind, wobei die Distanzmesseinheit hierfür mindestens ein Element aufweist, welches ausgebildet ist zur zweifachen Verwendung in der ersten als auch in der zweiten Messfunktionalität, also in beiden Messfunktionalitäten eingesetzt wird.

Optional ist die erste Strahlquelle ein Element zur dualen Verwendung. D.h. dass das wenigstens eine Element zur zweifachen Verwendung sowohl in der ersten als auch in der zweiten Messfunktionalität die erste Strahlquelle ist, wobei diese nicht das einzige dual verwendete Element der Distanzmesseinheit sein muss. Zur dualen Verwendung ist optional die erste Strahlquelle in unterschiedlichen Betriebszuständen bzw. mit unterschiedlichen Parametern betreibbar, wobei sich diese wenigstens zwei Betriebszustände vorzugsweise hinsichtlich der Leistung und/oder Emissionsdauer der erzeugten ersten Messstrahlung unterscheiden, also beispielsweise die erste Strahlquelle in der ersten Messfunktionalität mit einer geringeren Leistung emittiert als in der zweiten Messfunktionalität und/oder in der ersten Messfunktionalität im Dauerstrichbetrieb (continuous wave -cw) und in der zweiten Messfunktionalität im Pulsbetrieb gemessen wird. Z.B. kann erfindungsgemäss eine variierbare Temperatur einer Laserdiode als erste Strahlquelle und/oder ein an der Laserdiode anliegende variierbarer elektrischer Strom den Betriebszustand verkörpern. Jedenfalls erfolgt in dieser optionalen Ausbildung des Lasertrackers das Bestimmen einer Distanz zum Ziel sowohl in der ersten als auch in der zweiten Messfunktionalität unter Verwendung der ersten Messstrahlung, womit also bei jeglicher Art von Ziel anhand vom Ziel reflektierter und detektierter erster Messstrahlung die koordinative Positionsbestimmung erfolgt, wobei die erste Messstrahlung dabei je nach Messfunktionalität unterschiedliche Eigenschaften aufweisen oder unterschiedlich detektiert bzw. ausgewertet werden kann.

In einer weiteren Fortbildung des erfindungsgemässen Lasertrackers ist dieser ausgebildet zur fortlaufenden Verfolgung eines sich bewegenden retroreflektierenden Ziels in der ersten Messfunktionalität. Somit erfolgt also im Rahmen der ersten Messfunktionalität ein Tracken des Ziels. Zur fortlaufenden Zielverfolgung oder Feinanzielung des Ziels weist der Lasertracker z.B. eine Zielfeinanzielungs- und -verfolgungseinheit (ATR-Einheit; Automatic Target Recognition) einem Feinanzielsensor bzw. Flächensensor und vorzugsweise mit einer Feinanzielungsstrahlquelle auf und es wird beispielsweise auf dem Feinanzielsensor des Lasertrackers eine Ablage empfangener Feinanzielungsstrahlung oder Messstrahlung von einer Nullposition ermittelt. Als Feinanzielsensor ist in diesem Zusammenhang ein Flächensensor, z.B. ein CMOS-Sensor, CCD-Sensor oder positionssensitiver Sensor (PSD) zu verstehen, mit welchem vorzugsweise ein Schwerpunkt einer Lichtverteilung auf der Sensorfläche bestimmt werden kann. Der Flächensensor ist optional Teil einer ATR-Kamera. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik wird das Ausgangssignal ausgewertet und der Schwerpunkt ermittelt. Die Ermittlung der Position des Schwerpunkts des auftreffenden Lichtpunkts kann dabei sehr schnell (z.B. Mikrosekundenbereich) und mit einer Nanometer-Auflösung erfolgen. Zu diesem Zweck und zum Erreichen einer hohen Genauigkeit ist das Sichtfeld der ATR-Kamera bzw. des Sensors vergleichsweise klein, d.h. korrespondierend zum Strahldurchmesser des Feinanzielungsstrahls oder Messlaserstrahls, gewählt. Eine Erfassung erfolgt dabei vorzugsweise koaxial zur Messachse, also Messrichtung der ersten Messstrahlung, so dass die Erfassungsrichtung der Messrichtung entspricht. Mittels dieser messbaren Ablage der empfangenen Messstrahlung von einer Nullposition wird eine Positionsdifferenz zwischen dem Zentrum eines Retroreflektors und dem Auftreffpunkt des Messstrahls auf dem Reflektor bestimmt und die Ausrichtung des Feinanzielungsstrahls oder Messstrahls in Abhängigkeit dieser Abweichung derart korrigiert bzw. nachgeführt, dass die Ablage auf dem Feinanzielsensor verringert wird, insbesondere "Null" ist, und damit die Messachse in Richtung des Reflektorzentrums ausgerichtet ist. Durch das Nachführen der Ausrichtung der Messachse bzw. des Strahls erfolgt optional eine fortlaufende Zielverfolgung (Tracking) des Zielpunkts und die Entfernung und Position des Zielpunkts wird fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Optik aufweist, realisiert werden.

Als weitere Option weist der Lasertracker eine optische Bilderfassungseinheit mit einem zweidimensionalen, lichtempfindlichen Array auf, z.B. einer CCD- oder CID-Kamera (CCD = charge coupled device; CID = charge injection device) oder einer auf einem CMOS-Array basierenden Kamera mit variablem Zoom. Mit dem Erfassen und Auswerten wenigstens eines Bildes - mittels Bilderfassungseinheit und Bildverarbeitung durch die Steuer- und Auswerteeinheiteines so genannten Messhilfsinstruments mit Markierungen, deren fixe relative Lagen zueinander bekannt sind, wird auf eine absolute oder relative Orientierung des Messhilfsinstruments und eines an dem Messhilfsinstrument angeordneten Objekts (z.B. eine Sonde) im Raum geschlossen. Ein solches Messhilfsinstrument ist z.B. ein Tastwerkzeug, das mit einem Kontaktpunkt auf einem Punkt des zu vermessenden Objekts positioniert wird oder ein Handscanner, wie er beispielsweise in der EP 0 553 266 beschrieben ist. Das Tastwerkzeug weist optische Markierungen, z. B. selbstleuchtende Lichtpunkte oder ein durch Farbe oder Helligkeit optisch wahrnehmbares Muster, und einen Reflektor auf, der den Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Vorzugsweise wird zusammen mit der mittels der Distanzmesseinheit bestimmten räumlichen Position des Zielpunkts die Position und Orientierung des Objekts im Raum präzise bestimmt. Ausserdem weist der Lasertracker optional eine Übersichtskamera zum Bereitstellen von Übersichtsbildern auf, die z.B. auf einem Bildschirm des Lasertrackers einem Benutzer angezeigt werden.

Alternativ oder zusätzlich ist der Lasertracker ausgebildet zur Durchführung einer Vielzahl von Distanzmessungen zu einer Vielzahl von diffus streuenden Zielen bzw. Zielpunkten auf der Oberfläche eines zu vermessenden Messobjektes in der zweiten Messfunktionalität. Dabei ist die Steuer- und Auswerteeinheit derart ausgebildet, dass für die Vielzahl der Distanzmessungen die jeweils erfassten Drehwinkel mit den gemessenen Distanzen verknüpft werden, sodass durch die Verknüpfung Punktpositionen der jeweiligen Zielpunkte definiert sind, und eine eine Anzahl der Punktpositionen aufweisende Punktwolke erzeugbar ist. Dies erfolgt z.B. mit einer Rate von wenigstens 1000 Punktpositionen pro Sekunde, beispielsweise werden pro Sekunde wenigstens 10.000 Punktpositionen ermittelt. Kurz formuliert ist der Lasertracker also ausgebildet zum Scannen einer natürlichen Oberfläche im Rahmen der zweiten Messfunktionalität. Der Lasertracker weist dabei zum Tracken bzw. Scannen Mittel auf zum Verschwenken der Distanzmesseinheit bzw. der Strahllenkeinheit gegenüber der Basis, so dass eine zielverfolgende bzw. eine einem vorgegebenen Scanmuster folgende Bewegung des Messstrahls ermöglicht ist.

Optional ist die Steuer- und Auswerteeinheit dergestalt ausgebildet, dass die für das Ziel optimale oder geeignete Messfunktionalität automatisch auswählbar ist. Mit anderen Worten weist die Steuer- und Auswerteeinheit eine Umschaltfunktionalität auf, wodurch nicht der Benutzer die passende Messfunktionalität zu wählen braucht, sondern das Gerät erkennt von alleine, welche Art Ziel vorliegt und damit in welcher der wenigstens zwei Messfunktionalitäten die Vermessung erfolgen soll. Die automatische Auswahl oder das automatische Umschalten von einer auf die andere Messfunktionalität erfolgt vorzugsweise anhand empfangener Messstrahlungsreflexion, wobei dies auch beinhaltet, dass fast keine oder keine Messstrahlung empfangen wird, was dahingehend ausgelegt wird, dass die benutzte Messfunktionalität nicht geeignet ist, weil sie zu keinem Signalempfang führt. Alternativ oder zusätzlich basiert die Umschaltfunktionalität auf anderweitigen Messdaten, beispielsweise erfolgt sie anhand der Daten, die von einer Übersichtskamera des Lasertrackers oder einer ATR-Kamera des Lasertrackers bereitgestellt werden.

In einer weiteren Fortbildung ist neben der ersten Strahlquelle wenigstens ein weiteres Element der Distanzmesseinheit zur dualen Verwendung ausgebildet, d.h. dass mindestes zwei der Elemente der Distanzmesseinheit zur Verwendung sowohl in der ersten Messfunktionalität als auch in der zweiten Messfunktionalität ausgebildet sind.

In einer Weiterführung dieser Fortbildung ist die gesamte Distanzmesseinheit zur dualen Verwendung ausgebildet, also alle Elemente der Distanzmesseinheit sind zur zweifachen Verwendung, in beiden Messfunktionalitäten, ausgebildet. Dabei erfolgt trotz Gleichheit aller verwendeten Bauteile erfindungsgemäss in einigen Ausführungsformen kein uniformes Anwenden der Distanzmesseinheit, sondern in je einer für das Ziel bzw. die Vermessungsaufgabe angepassten bzw. optimierten Einsatzweise der Distanzmesseinheit, wozu wenigstens eines der Elemente in wenigstens zwei unterschiedlichen Betriebszuständen betreibbar ist, wie weiter oben beispielsweise für die erste Strahlquelle beschrieben. Dadurch wird ermöglicht, dass wenigstens dieses eine Element in der ersten Messfunktionalität in einer speziell für die Vermessung retroreflektierender Ziele zugeschnittenen Weise arbeitet und in der zweiten Messfunktionalität in einer speziell für die Vermessung diffus streuender Ziele zugeschnittenen Weise. Die zwei verschiedenen Messfunktionalitäten werden in dieser Ausführungsform also mittels dualer Verwendung der gesamten Distanzmesseinheit bei unterschiedlicher Steuerung bzw. Verwendung der Distanzmesseinheit bzw. eines ihrer Elemente je nach Messfunktionalität bereitgestellt. Alternativ erfolgt in anderen, einfacheren Ausführungsformen die duale Verwendung der kompletten Distanzmesseinheit in beiden Messfunktionalitäten mit gleichem Betriebsmodus der Distanzmesseinheit.

In einer alternativen Fortbildung zur vorher genannten Ausführungsform ist wenigstens ein Element der Distanzmesseinheit zur singulären Verwendung in nur der ersten oder nur der zweiten Messfunktionalität ausgebildet. D.h. dass wenigstens ein Bestandteil der Distanzmesseinheit nur bei einer der beiden Messfunktionalitäten eingesetzt und nicht dual verwendet wird. Dieses wenigstens eine Element ist in einigen Ausführungsformen eine zweite Detektionseinheit, welche die Distanzmesseinheit aufweist. Somit weisen diese Ausführungsformen eine Distanzmesseinheit auf, die neben der ersten Detektionseinheit wenigstens eine zweite Detektionseinheit umfasst.

In einer Ausführungsform mit zweiter Detektionseinheit ist die Distanzmesseinheit dergestalt ausgebildet, dass die erste Strahlquelle als ein Element zur dualen Verwendung erste Messstrahlung erzeugt, die sowohl von der ersten als auch von der zweiten Detektionseinheit detektierbar ist. Dabei wird vorzugsweise in der ersten Messfunktionalität empfangene Messstrahlungsreflexion der ersten Messstrahlung ausschliesslich von der ersten Detektionseinheit detektiert und in der zweiten Messfunktionalität empfangene Messstrahlungsreflexion der ersten Messstrahlung ausschliesslich von der zweiten Detektionseinheit detektiert. Mit anderen Worten weist diese Ausführungsform die dual in beiden Messfunktionalitäten verwendete erste Strahlquelle auf, um zwei singulär in jeweils einer der beiden Messfunktionalitäten verwendete Detektoreinheiten mit Messstrahlung zu versorgen bzw. erste Messstrahlung, die von einem retroreflektierenden Ziel reflektiert wird, wird z.B. von der ersten Detektoreinheit detektiert und erste Messstrahlung, die von einem diffus streunenden Ziel reflektiert wird, wird entsprechend von der zweiten Detektoreinheit detektiert. Alternativ wird in der ersten und/oder zweiten Messfunktionalität reflektierte erste Messstrahlung sowohl von der ersten als auch der zweiten Distanzmesseinheit detektiert, beispielsweise zu ungefähr gleichen Anteilen oder mit einem höheren Anteil für die zweite Detektionseinheit, die diffus gestreute Messstrahlung detektiert.

Optional ist in allen Ausführungsformen mit zweiter Detektionseinheit und dualer Verwendung der ersten Strahlquelle die zweite Detektionseinheit als Waveform-Digitizing-Einheit (WFD-Einheit) ausgebildet. Als weitere Option weist der Lasertracker wenigstens ein veränderbares Umlenkelement auf zur Beeinflussung des optischen Pfades der ersten Messstrahlung, z.B. einen elektro-optischen Strahlteiler mit veränderbarer optischer Eigenschaft, oder einen drehbares Umlenkelement wie einen Spiegel, insbesondere um erzeugte bzw. reflektierte erste Messstrahlung von der ersten Strahlquelle je nach Messfunktionalität zumindest im Wesentlichen zur jeweiligen Detektionseinheit zu leiten.

Zusätzlich oder bevorzugt alternativ weist in Ausführungsformen mit zweiter Detektionseinheit die Distanzmesseinheit als wenigstens ein weiteres Element zur singulären Verwendung eine zweite Strahlquelle, vorzugsweise eine SLED oder Laserquelle, zur Erzeugung zweiter Messstrahlung auf, wobei entweder in der ersten oder zweiten Messfunktionalität die Distanz zum Ziel unter zusätzlicher Verwendung der zweiten Messstrahlung bestimmt wird. Die Distanzbestimmung erfolgt also in einer der beiden Messfunktionalitäten ausschliesslich mit der ersten Messstrahlung. In der anderen Messfunktionalität erfolgt die Distanzbestimmung anhand der ersten Messstrahlung und zusätzlich anhand der zweiten Messstrahlung. Beispielsweise erlaubt die erste Messstrahlung bei einer Art von Zielen, z.B. retroreflektierenden, nur eine vergleichweise ungenaue Distanzbestimmung, welche durch die zweite Messstrahlung verfeinert wird. Anders betrachtet ermöglicht die Verwendung der zweiten Messstrahlung eine höhere Präzision der Distanzbestimmung, welche bei der Vermessung eines Ziels mit Retroreflektor von Vorteil ist, jedoch für die zweite Messfunktionalität, vor allem beim Scannen einer Objektoberfläche, nicht notwendig ist und z.B. die Scangeschwindigkeit/Scanrate zu sehr drosseln würde.

In einer solchen Ausführungsform ist deshalb als Option die zweite Detektionseinheit ausgebildet zur Bestimmung von relativen Distanzen, vorzugsweise, um die anhand der ersten Messstrahlung bzw. mittels der ersten Detektionseinheit ermittelte absolute Distanz zu präzisieren, und dient zur singulären Verwendung in der ersten Messfunktionalität. Speziell ist dabei die zweite Detektionseinheit als Interferometereinheit ausgebildet. Die zweite Strahlquelle dient dabei zur Bereitstellung von Messstrahlung zur Detektion durch die zweite Detektionseinheit, d.h. die zweite Detektionseinheit ist zur Detektion zweiter Messstrahlung ausgebildet und im Rahmen der ersten Messfunktionalität wird zweite Messstrahlung von der zweiten Detektionseinheit detektiert.

Optional ist in einigen Ausführungsformen die erste Detektionseinheit zur Bestimmung von absoluten Distanzen ausgebildet. Vorzugsweise ist die erste Detektionseinheit dabei ausgebildet als WFD-Einheit, so dass die Distanzmessung auf dem bekannten Wafe-Form-Digitizing-Prinzip basiert. Alternativ ist die erste Detektionseinheit ausgebildet als FMCW-Einheit, so dass die Distanzmessung auf dem bekannten Frequency-Modulated-Continuous-Wave-Prinzip basiert oder als Frequency-Comb-Einheit, so dass die Distanzmessung auf dem bekannten Frequency-Comb-Prinzip basiert, oder als Absolutinterferometer, so dass die Distanzmessung auf einem bekannten absoluten, vorzugsweise frequenzscannenden Interferometerprinzip basiert. Eine derartige erste Detektionseinheit findet sich insbesondere in solchen Ausführungsformen, in denen wie oben beschrieben die gesamte Distanzmesseinheit zur dualen Verwendung ausgebildet ist.

Ein weiterer Gegenstand der vorliegenden Erfindung ist ein Verfahren zum industriellen koordinativen Positionsbestimmen eines Ziels mit einem Lasertracker, wobei der Lasertracker mindestens aufweist eine Basis, eine Steuer- und Auswerteeinheit und eine Strahllenkeinheit mit einer Aussende- und -empfangsoptik zum Aussenden von Licht als Messstrahlung und zum Empfangen von Messstrahlungsreflexionen. Weiter weist der Lasertrackereine optische Distanzmesseinheit mit mindestens folgenden Elementen auf: eine erste Strahlquelle, vorzugsweise eine SLED oder Laserquelle, und eine erste Detektionseinheit. Das Verfahren umfasst mindestens die folgenden Schritte:
- Erzeugen von erster Messstrahlung durch die erste Strahlquelle,
- Aussenden von erster Messstrahlung und Empfangen von vom Ziel reflektierter erster Messstrahlung mittels der Aussende- und -empfangsoptik,
- Detektieren von empfangener reflektierter erster Messstrahlung,
- Bestimmen einer Distanz zum Ziel anhand detektierter Messstrahlung, und
- Bestimmen von Drehwinkeln der Strahllenkeinheit relativ zur Basis.

Erfindungsgemäss erfolgt auf Abfrage jeweils anhand von bestimmten Drehwinkeln und wenigstens einer bestimmten Distanz in einer ersten Messfunktionalität ein koordinatives Positionsbestimmen eines retroreflektierenden Ziels und in einer zweiten Messfunktionalität ein koordinatives Positionsbestimmen eines diffus streuenden Ziels, wobei wenigstens ein Element der Distanzmesseinheit dual sowohl in der ersten Messfunktionalität als auch in der zweiten Messfunktionalität verwendet wird. Es kann also im Rahmen des erfindungsgemässen Verfahrens durch Umschalten ein Vermessen eines kooperativen Ziels wie einem retroreflektierenden Prisma als auch ein Vermessen einer natürlichen Objektoberfläche wie derjenigen einer Metallplatte oder eines Kunststoffformteil erfolgen.

In einer Fortbildung des erfindungsgemässen Verfahrens erfolgt das Bestimmen einer Distanz zum Ziel sowohl in der ersten als auch in der zweiten Messfunktionalität unter Verwendung der ersten Messstrahlung, wozu die erste Strahlquelle als wenigstens eines der Elemente bzw. das eine Element zur dualen Verwendung in beiden Messfunktionalität dient.

In einer weiteren Fortbildung des erfindungsgemässen Verfahrens wird wenigstens ein Element der Distanzmesseinheit nur in der ersten oder nur in der zweiten Messfunktionalität eingesetzt. Dieses Element ist z.B. die erste Detektionseinheit oder eine zweite Detektionseinheit, welche der Lasertracker aufweist und/oder eine zweite Strahlquelle, welche zweite Messstrahlung erzeugt, welche nur in der ersten und oder zweiten Messfunktionalität eingesetzt wird.

Ein weiterer Gegenstand der vorliegenden Erfindung ist ein Computerprogrammprodukt mit Programmcode, der auf einem maschinenlesbaren Träger gespeichert ist, zur Steuerung bzw. Durchführung des erfindungsgemässen Verfahrens zur koordinativen Positionsbestimmung, insbesondere wenn das Programm auf einer als Steuer- und Auswerteeinheit eines erfindungsgemässen Lasertrackers ausgebildeten elektronischen Datenverarbeitungseinheit ausgeführt wird.

Der erfindungsgemässe Lasertracker bietet also den Vorteil, dass mit einer einzigen, kompakten Distanzmesseinheit zwei Messfunktionalitäten bereitgestellt werden, so dass sowohl retroreflektierende als auch diffus streuende Ziele, vorzugsweise spezialisiert, vermessbar sind. Durch den erfindungsgemässen Lasertracker mit nur einer einzigen Distanzmesseinheit kann im Vergleich zu Geräten des Stands der Technik der Produktionsaufwand verringert werden, vor allem in solchen Ausführungsformen, bei denen die Distanzmesseinheit als Ganzes dual verwendet wird. Dabei wird durch die erfindungsgemässe Ausbildung der Steuer- und Auswerteeinheit und der Distanzmesseinheit des Lasertrackers, welche die Bereitstellung zweier spezialisierter Lasertracker-Messfunktionalitäten ermöglicht, vorteilhaft eine an die jeweilige spezielle Zielart bzw. Vermessungsaufgabe angepasste industrielle koordinative Positionsbestimmung ermöglicht. Mit anderen Worten wird durch die vorliegende Erfindung neben der an sich bekannten industriellen Vermessung von mit Retroreflektoren ausgestatteten Zielen wie z.B. Messtaster die industrielle Vermessung von natürlichen Objektoberflächen ermöglicht, wobei der konstruktive Aufwand oder die Herstellungskosten im Vergleich zu Lasertrackern des Stands der Technik vorteilhaft verringert sind.

Der erfindungsgemässe Lasertracker und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: einen erfindungsgemässen Lasertracker beim Positionsbestimmen zu einem retroreflektierenden Ziel in der ersten Messfunktionalität;
- Fig. 2: einen erfindungsgemässen Lasertracker beim Positionsbestimmen zu einem diffus streuenden Ziel in der zweiten Messfunktionalität;
- Fig. 3: einen erfindungsgemässen Lasertracker beim scannenden Positionsbestimmen zu einem diffus streuenden Ziel in der zweiten Messfunktionalität;
- Fig. 4: einen erfindungsgemässen Lasertracker in einer Frontalansicht;
- Fig. 5a,b: eine erste Ausführungsform eines optischen Aufbaus eines erfindungsgemässen Lasertrackers bei Verwendung in der ersten bzw. der zweiten Messfunktionalität;
- Fig. 6: eine zweite Ausführungsform eines optischen Aufbaus eines erfindungsgemässen Lasertrackers bei Verwendung in der ersten bzw. der zweiten Messfunktionalität; und
- Fig. 7: eine dritte Ausführungsform eines optischen Aufbaus eines erfindungsgemässen Lasertrackers bei Verwendung in der ersten bzw. der zweiten Messfunktionalität.

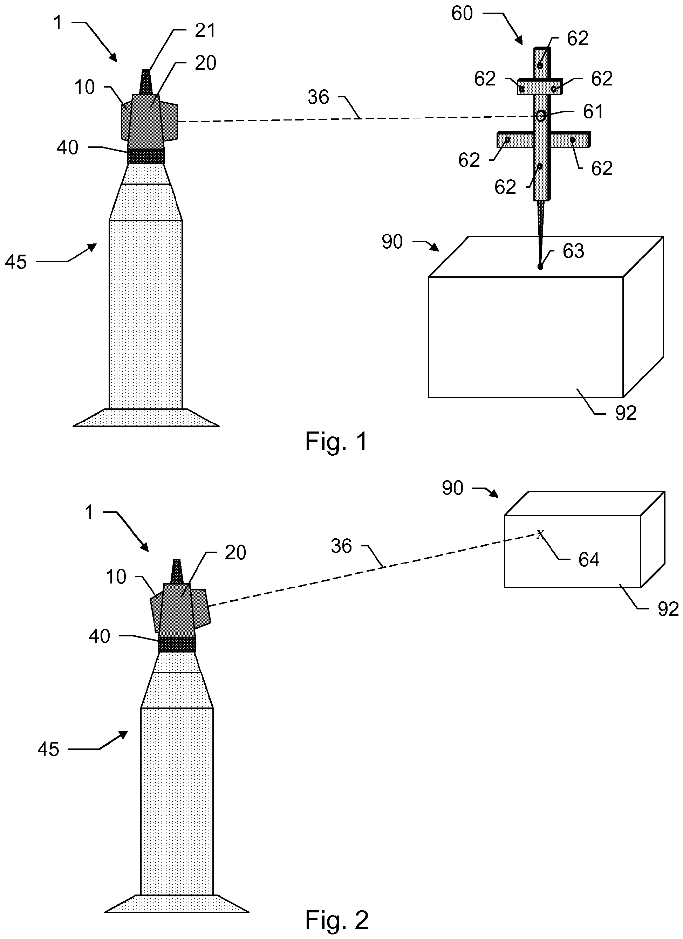

Die Figuren 1, 2 und 3 zeigen eine beispielhafte Ausführungsform eines erfindungsgemässen Lasertrackers 1. Der gezeigte Lasertracker 1 weist eine Basis 40, eine darauf angebrachte Stütze 20 mit einem Griff 21 und eine an zwei Holmen der Stütze 20 gelagerte Strahllenkeinheit 10 auf. Der Lasertracker 1 ist auf einem Stativ 45 angeordnet und weist eine Steuer- und Auswerteeinheit, Winkelsensoren zum Erfassen von Drehwinkeln der Strahllenkeinheit 10 relativ zur Basis 40 und eine optische Distanzmesseinheit mit wenigstens einer ersten Strahlquelle, z.B. einer oder mehrerer Laserdioden oder Superlumineszenz-LEDs, wenigstens einer ersten Detektionseinheit - beispielsweise eine elektronische Distanzmessmeinheit, eine Absolutdistanzeinheit (ADM) oder eine Interferometereinheit (IFM) - auf (hier nicht dargestellt). Durch geeignete Synchronisation der Winkelsensoren sind zwei Winkel und wenigstens eine mittels der ersten Messstrahlung 36 ermittelte Distanz zu einer polaren 3D-Koordinate des Ziels (hier: Retroreflektor 61) kombinierbar.

Figur 1 zeigt, wie in einer ersten Messfunktionalität der Lasertracker 1 mittels Licht als erste Messstrahlung 36 die Distanz zu einem auf einem Messhilfsmittel 60 befindlichen Retroreflektor 61 misst, der das zu vermessende Ziel darstellt. Das Messhilfsmittel 60 - hier beispielhaft als Messtaster ausgeführt - umfasst weiterhin eine Anzahl Zielmarkierungen 62, beispielsweise in Form von reflektierenden oder selbstleuchtenden Lichtpunkten, sowie einen Messkopf 63 zum Plazieren auf einem zu vermessenden Punkt eines Zielobjektes 90.

Zum Auffinden des Messhilfsmittels 60 bzw. des Reflektors 61 und Ausrichtung des Lichtstrahls 36 auf den Reflektor 61 sind optional am erfindungsgemässen Lasertracker 1 eine Zielauffindungseinheit mit einem oder vorzugsweise mehreren Beleuchtungsmitteln (hier nicht dargestellt) zur Beleuchtung des Reflektors 61 mit Strahlung einer bestimmten Wellenlänge, insbesondere im infraroten Wellenlängenbereich, vorgesehen und zusätzlich zumindest eine, vorzugsweise zwei, Lokalisierungskameras mit positionssensitiven Detektoren und verhältnismässig grossem Sichtfeld am Gerät 1 angeordnet (hier nicht dargestellt). Die an dem Reflektor 61 reflektierte und zum Lasertracker 1 rückgestrahlte Beleuchtungsstrahlung kann mittels der Lokalisierungskameras detektiert und mit jedem der positionssensitiven Detektoren eine Position des Reflektors 61 auf dem jeweiligen Detektor abgebildet werden. Somit können zwei abgebildete Positionen des Reflektors bestimmt und in Abhängigkeit dieser abgebildete Zielpositionen des Reflektor 61 aufgefunden - z.B. nach allgemein bekannten Prinzipien der Photogrammetrie - und die Strahllenkeinheit 10 derart ausgerichtet werden, dass der Reflektor 61 mit dem Messstrahl 36 angezielt wird. Mittels der Kenntnis der Positionierung der Kameras relativ zu einer Emissionsrichtung des Lichtstrahls 36 kann also der Lichtstrahls 36 auf die ermittelte Grobposition des Reflektors 61 ausgerichtet und an diesen angekoppelt werden (lock-on). Anschliessend kann eine Feinzielung und/oder ein Tracken des Ziels mit Hilfe eines Feinanzielsensors (PSD) erfolgen, wie nachfolgend beschrieben.

Zur hochgenauen Anzielung (Feinanzielung) des Retroreflektors 62 und um Bewegungen des Retroreflektors 62 und damit des Messhilfsmittels 60 zu erkennen und nachvollziehen zu können, sodass der Lichtstrahl 36 auf den Retroreflektor 61 ausgerichtet bleibt, weist im Beispiel der Lasertracker 1, vorzugsweise in der Strahllenkeinheit 10, einen Feinanzielsensor auf, z.B. als Teil einer Zielfeinanzielungs- und -verfolgungseinheit, wobei der Feinanzielsensor vorzugsweise ein örtlich analog arbeitender Tracking-Flächensensor ist, wie beispielsweise in der WO 2007/079600 A1 geoffenbart, z.B. ein CMOS oder CCD-Sensor, mit welchem ein Schwerpunkt einer Lichtverteilung auf der Sensorfläche bestimmbar ist. Anhand des ermittelten Schwerpunkts ist eine Lagedifferenz der Lichtstrahlauftreffposition auf dem Flächensensor zu einer Ideal- oder Mittenlage ermittelbar und die Ausrichtung der Messstrahlung (mittels Ausrichtungsändern der Strahllenkeinheit 10) derart korrigierbar, dass die Lagedifferenz eliminiert oder zumindest verkleinerbar ist. Somit ermöglicht der Feinanzielsensor durch ein Erfassen der Ausrichtung des von einem Ziel, insbesondere dem Retroreflektor 61, reflektierten Lichtstrahls 36 das Nachführen der Ausrichtung des Messstrahls 36. Durch das Nachführen der Lichtstrahlausrichtung kann eine Feinanzielung und/oder eine fortlaufende Zielverfolgung (Tracking) des Zielpunkts erfolgen und dadurch unterbrechungslos die Entfernung und Position des Zielpunkts 61 fortlaufend bestimmt werden.

Der Lasertracker 1 weist als weitere Option eine Messkamera als optische Bilderfassungseinheit auf (hier nicht dargestellt). Vorzugsweise ist die Bilderfassungseinheit als fokussierbares Kamerasystem mit variabler Vergrösserung (Vario-Zoom-Messkamera) ausgestaltet sein kann, um die auf dem Messhilfsmittel 60 angeordneten Zielmarkierungen 62 auch bei sich ändernder Entfernung zum Messhilfsmittel 60 zu erfassen. Die Messkamera ist beispielsweise zusammen mit dem Lasertracker 1 um dessen im Wesentlichen senkrechte Achse drehbar, jedoch unabhängig vom Lasertracker 1 auf und ab schwenkbar und somit insbesondere von der Optik des Messstrahls 36 getrennt angeordnet. Mittels Anpassung ihrer Ausrichtung und Vergrösserung kann die Kamera somit fortlaufend ein Bild erfassen, in dem das Messhilfsmittel 60 und insbesondere die Lichtpunkte 62 des Messhilfsmittels 60 abgebildet sind. Dadurch entsteht ein elektronisch auswertbares, zweidimensionales Bild einer räumlichen Anordnung von Lichtpunkten. Zur Auswertung des Bilds ist weist die Steuer- und Auswerteeinheit eine Bildverarbeitungsfunktionalität auf. Damit kann eine Identifizierung der abgebildeten Lichtpunkte 62, eine Bestimmung der Schwerpunkte der abgebildeten Lichtpunkte 62 und eine Bestimmung der Bildkoordinaten dieser Schwerpunkte, aus denen beispielsweise Raumwinkel zwischen der optischen Achse des Lasertrackers 1 bzw. der Messkamera, insbesondere der Erfassungsrichtung, und der Richtung vom Lasertracker 1 zu den jeweiligen Lichtpunkten 62 berechnet werden können, erfolgen. Anhand der so von der Messkamera aufgenommenen Positionen der Zielmarkierungen 62 ist die räumliche Ausrichtung des Messhilfsmittels 60 (Roll-, Nick- und Gierwinkel) bestimmbar. Ein mit einer solchen Messkamera verwendbares Verfahren zum fortlaufenden Bestimmen der räumlichen Lage eines mehrere Zielmarkierungen 62 in fixer, bekannter räumlicher Verteilung relativ zueinander aufweisenden Messhilfsmittels 60 ist in der EP 2 557 391 A1 beschrieben.

Erfindungsgemäss sind die Steuer- und Auswerteeinheit und die Distanzmesseinheit dergestalt ausgebildet, dass mit dem Lasertracker 1 zusätzlich eine zweite Messfunktionalität durchführbar ist, die das Messen einer Distanz zu einer Oberfläche 92 des Messobjekts 90 ermöglicht, wie in Figur 2 gezeigt. Die Distanzmesseinheit, die -im Gegensatz zu einer modularen Bauweise- in einer integrierten Bauweise ausgeführt ist, weist hierzu wenigstens ein Element auf, das zur dualen Verwendung sowohl in der ersten als auch in der zweiten Messfunktionalität ausgebildet. Statt nur einem Element sind alternativ mehrere Elemente zur dualen Verwendung ausgebildet. Oder alle ihre Elemente sind zur dualen Verwendung ausgebildet, d.h. die Distanzmesseinheit ist in ihrer Gesamtheit zur dualen Verwendung ausgebildet und sie wird optional je nach Messfunktionalität unterschiedlich eingesetzt, z.B. indem die Laserquelle unterschiedlich betrieben wird, so dass die Art der Messstrahlungserzeugung je nach Messfunktionalität verschieden ist, oder indem die Detektionseinheit unterschiedlich betrieben wird, so dass die Messstrahlungsdetektion der ersten Messfunktionalität sich von derjenigen der zweiten Messfunktionalität unterscheidet, oder beides, so dass z.B. die Messrate je nach Messfunktionalität unterschiedlich ist. Mit anderen Worten ist nur ein Teil (ein oder mehrere Elemente) der Hardware der Distanzmesseinheit, die in der jeweiligen Messfunktionalität eingesetzt wird, gleich und andere Teile (weitere Elemente) der Hardware werden entweder nur in der ersten oder nur in der zweiten Messfunktionalität verwendet. Oder die komplette Hardware ist gleich und wird je nach Messfunktionalität zumindest teilweise auf unterschiedliche Art und Weise eingesetzt. Der unterschiedliche Einsatz oder Gebrauch erfolgt dabei durch unterschiedliche Betriebsmodi oder Betriebszustände der Distanzmesseinheit. Alternativ erfolgt der Einsatz der komplett zur dualen Verwendung ausgebildeten Distanzmesseinheit in beiden Messfunktionalitäten in gleichem Betriebszustand, wozu z.B. die erste Strahlquelle und die erste Detektionseinheit derart aufeinander abgestimmt sind, dass sowohl von einem diffus streuenden Ziel als auch einem retroreflektierenden Ziel - zumindest für gewisse Messreichweiten, Zielbeschaffenheiten (geeignetes Reflexionsvermögen des Ziels: ausreichend stark reflektierende natürliche Oberfläche und/oder hinreichend schwach reflektierender Retroreflektor) oder Umgebungsbedingungen - reflektierte Messstrahlung ausreichend gut (z.B. nicht zu hoher oder zu niedriger Signalpegel) empfangbar und mit für die gestellte Vermessungsaufgabe genügender Präzision auswertbar ist. Der Unterschied zwischen der ersten und der zweiten Messfunktionalität besteht in solchen Ausführungsformen im Wesentlichen dann in der Art und Weise der Auswertung der Messdaten oder der Anwendung des Lasertrackers, z.B. Anwendung zur fortlaufenden Zielverfolgung oder Anwendung zum Scannen einer Oberfläche, wobei auch eine kombinierte Anwendung möglich ist. Optional weist die Strahllenkeinheit 20 eine zusätzliche optische Einheit auf (hier nicht dargestellt), mit der der Strahl 36 vor dem Aussenden und/oder vor Wiedereintritt (also nach Reflexion am Ziel 61 oder 64) je nach Messfunktionalität beeinflusst oder verändert wird, z.B. eine Linse zur Veränderung des Strahlquerschnitts oder eine Fokussieroptik, oder ein Filter oder Abschwächer zur Beeinflussung der Strahlintensität.

Figur 2 zeigt den Lasertracker 1 aus Figur 1 beim Messen einer Distanz zu einem Punkt 64 des Messobjekts 90 mittels der Distanzmesseinheit im Rahmen der zweiten Messfunktionalität. Die Distanz wird anhand empfangener von der Objektoberfläche 92 reflektierter Messstrahlung des Lichtstrahls 36 im Beispiel mittels einer in der Distanzmesseinheit vorgesehenen ersten Detektoreinheit, z.B. einer Wave-Form-Digitizing-Einheit (WFD-Einheit; hier nicht dargestellt) gemessen. Diese zweite Messfunktionalität, welche mittels der dazu ausgebildeten Steuer- und Auswerteeinheit und Distanzmesseinheit bereitgestellt wird, erlaubt Distanzmessungen ohne Verwendung eines Retroreflektors bzw. eines Messhilfsmittels, also eine Messung mit einem nicht-kooperativen Ziel wie ein Punkt 64 der diffus streuenden Objektoberfläche 92.

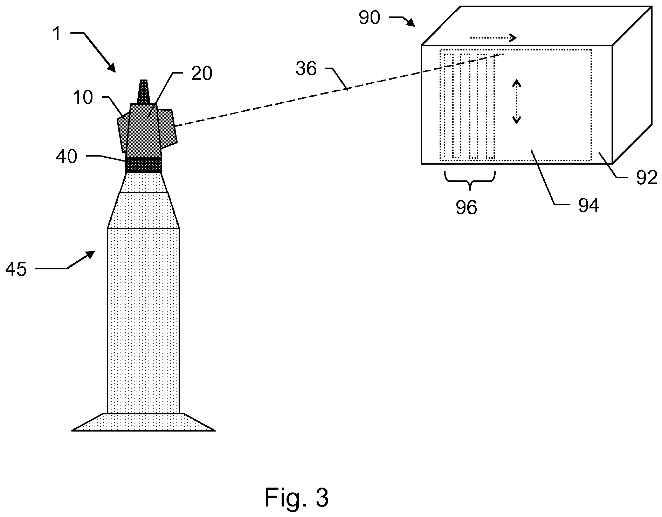

Mittels der Steuer- und Auswerteeinheit wird optional dabei jeweils aus einer in einer bestimmten Zeitperiode aufakkumulierten Anzahl an Messsignalen (z.B. abhängig von einem gewählten Scanmodus, siehe Beschreibung zu Figur 3) eine Entfernung ermittelt und zusammen mit den zugehörigen Raumwinkeldaten als Messpunkt 64 in einem Hauptspeicher ablegt. Die Zeitperiode beträgt z.B. 0.001s, 0.002s, 0.004s, 0.008s oder 0.016s. Der Hauptspeicher kann Bestandteil des Lasertrackers 1 sein (nicht dargestellt) oder ein externer Hauptspeicher sein. Dabei kann beispielsweise in Abhängigkeit von Parametern wie Entfernung zu dem zu messenden Objekt 90 und/oder von Anforderungen des Nutzers wie z.B. Auflösung, Messdistanz, Messgeschwindigkeit oder Messgenauigkeit über eine unterschiedliche Anzahl von empfangenen Messsignalen gemittelt werden, um einen einzelnen Messpunkt 64, z.B. einen Scanpunkt für eine Punktwolke, zu erhalten. Weiter ist die Steuer- und Verarbeitungseinheit optional so konfiguriert, dass die Winkelgeschwindigkeit der Strahllenkeinheit 10 an die Entfernung bzw. den Scanmodus, der bei einer bestimmten Entfernung sinnvoll genutzt werden kann, angepasst ist.

In der Figur 3 ist eine Ausführungsform des erfindungsgemässen Lasertrackers 1 gezeigt, bei welcher mit der Distanzmesseinheit eine Scanfunktionalität ausführbar ist. Dabei wird auf einer Scanfläche 94 einer Oberfläche 92 des Messobjektes 90 eine Vielzahl von Mess- bzw. Zielpunkten nacheinander von der Strahllenkeinheit 10 angezielt, wobei jeweils eine Distanz ermittelt wird und mit Winkeldaten verknüpft wird, sodass für jeden der Messpunkte eine Position ermittelt werden kann. Die ermittelten Positionen der Messpunkte werden dann zu einer Punktwolke zusammengefügt. Das Anzielen der Punkte kann, wie hier dargestellt, durch ein Abfahren der Scanfläche 94 in einem regelmässigen Muster 96 erfolgen, z. B. in parallelen Bahnen mit einem definierten Abstand zueinander. Die Bewegung des Messstrahls 36 ist im hier gezeigten Beispiel oszillierend, wobei zur Vereinfachung der Darstellung die oszillierende Bewegung der Messstrahlung 36 nur für einen Ausschnitt der zu scannenden Oberfläche 94 gezeigt ist. Die oszillierende Bewegung des Messstrahls 36 ergibt sich in diesem Beispiel durch ein Abwechseln eines kontinuierlich vertikalen Ausrichtens und schrittweise horizontalen Ausrichtens der emittierten Messstrahlung 36 mittels der Strahllenkeinheit 10. Dazu wird die Strahllenkeinheit 10 kontinuierlich in einem definierten Winkelbereich um ihre Kippachse auf und ab verschwenkt und jeweils beim Erreichen des vertikalen Wendepunktes in einem Schritt um die Drehachse um einen vordefinierten Winkelbetrag jeweils in die gleiche Richtung horizontal verschwenkt. Die Schwenkbewegungen der Strahllenkeinheit 10 werden dabei mittels der Steuer- und Auswerteeinheit des Lasertrackers 1 gesteuert.

Im Beispiel wird mit einer konstanten Pulsrate von 1 Million Laserpulsen pro Sekunde und mit konstanter, in diesem Beispiel zumindest in vertikaler Richtung kontinuierlicher Scangeschwindigkeit der Scanbereich 94 auf der Oberfläche 92 des Objekts 90 abgescannt. Hierdurch ergeben sich Messsignalreihen mit Messsignalen. Es werden nun immer über die gleiche Zeitperiode, die abhängig vom Scanmodus ist, Messsignale der jeweiligen Messsignalreihe aufkummuliert und hieraus die Distanz zum Objekt 90 ermittelt und die zugehörigen Raumwinkel zugeordnet, um einen Scanpunkt zu erhalten. Z.B. werden bei der genannten Pulsrate im Idealfall 1000 Pulse bzw. Messsignale für die Ermittlung eines Scanpunkts bzw. Distanzmesswerts. Statt der Messsignalreihen können auch Messsignalfelder definierter Geometrie und Größe und somit einer definierten Anzahl und Verteilung von Messsignalen herangezogen werden, um einen Scanpunkt zu ermitteln.

Neben der im Beispiel gezeigten oszillierenden Bewegung der Messstrahlung kann die Messstrahlung beim Ausführen der Scanfunktionalität durch entsprechende Ansteuerung der Strahllenkeinheit 10 mittels der Steuerungs- und Verarbeitungseinheit je nach gewähltem bzw. von einer Programmspeichereinheit des Lasertrackers 1 bereitgestelltem Scanmodus auch jede andere Bewegung ausführen, um einen ausgewählten Scanbereich 94 zu erfassen. Insbesondere kann sowohl das Verschwenken um die Kippachse als auch um die Drehachse kontinuierlich erfolgen und je nach Anforderung kann auch das vertikale Schwenken statt des horizontalen Schwenkens diskontinuierlich erfolgen. Ist der Scanbereich 94 beispielsweise eine horizontale Linie, so erfolgt eine kontinuierliche, horizontale Ausrichtung des Messstrahls 36 durch kontinuierliches Schwenken der Strahllenkeinheit 10 in eine Richtung um die Drehachse. Für bestimmte Anforderungen, wie beispielsweise Einzelpunktmessungen oder Messungen von weit voneinander beabstandeten Punkten oder Messungen mit geringer Auflösung, kann die Strahllenkeinheit auch um beide Achsen diskontinuierlich, insbesondere schrittweise verschwenkt werden. Als ein spezielles Beispiel für einen weiteren Scanmodus kann auch eine Messung mit konstanter Auflösung, d.h. mit konstanter Messpunktdichte pro ausgemessener Scanwegstrecke bzw. ausgemessener Fläche, in der Programmspeichereinheit hinterlegt sein. Bei diesem Scanmodus erfolgt eine kontinuierliche adaptive Anpassung der Winkelgeschwindigkeit der Strahllenkeinheit 10 abhängig von der Entfernung zum zu vermessenden Objekt 90, so dass die Messpunktdichte für eine zu scannende Fläche 94 während des Scanvorgangs auch bei sich verändernden Entfernungen zu dem Objekt 90, z.B. bei einer komplexen Gebäudestruktur, konstant bleibt. Die Entfernung zum zu vermessenden Objekt 90 wird dabei während des Scans kontinuierlich (mit jedem Messpuls) oder in kurzen Abständen immer wieder bestimmt (jeder 3., 5., 10.... Messpuls, je nach Pulsrate).

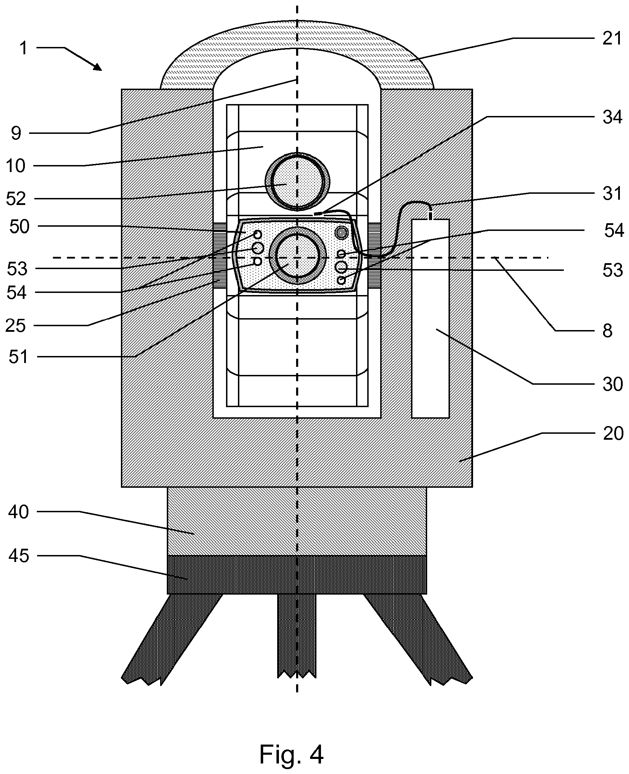

Figur 4 zeigt eine beispielhafte Ausführungsform eines erfindungsgemässen Lasertrackers s 1 in einer Frontalansicht. Der Lasertracker 1 umfasst eine Basis 40, die auf einer Haltevorrichtung befestigbar ist, hier dargestellt in Form eines Stativs 45. Auf der Basis 40 ist eine Stütze 20 um die Vertikalachse 9 drehbar gelagert angebracht. Die Stütze 20 umfasst einen ersten und einen zweiten Holm, die von einem unteren Teil der Stütze 20 aus nach oben ragen und an welchen eine Strahllenkeinheit 10 mittels einer Welle 25 um die Horizontalachse 8 kippbar gelagert ist. An den beiden Holmen ist oben ein Griff 21 für den Transport und die Handhabung des Lasertrackers 1 durch einen Benutzer angebracht.

Sowohl die Lagerung der Stütze 20 an der Basis 40 als auch die Lagerung der Strahllenkeinheit 10 an der Stütze 20 ist vorzugsweise als ein Fest-Los-Lager ausgeführt. Achsfehler infolge von Temperatureinflüssen und die daraus resultierenden Genauigkeitsverluste werden so minimiert. Ausserdem ist eine temperaturbedingte Ausdehnung der Welle 25 unkritisch und beeinflusst eine Verspannung des Lagers nicht. Der Griff 21 kann insbesondere fest mit den beiden Holmen verbunden sein, beispielsweise aus einem Guss mit diesen hergestellt, angeschweißt, angeklebt oder angeschraubt sein, so dass er als zusätzlich stabilisierendes Element für die Holme dient, insbesondere hinsichtlich eines Verbiegens. Vorteilhaft kann der Griff 21 derart geformt sein, dass er eine exakt nach oben gerichtete Messung, d. h. entlang der Vertikalachse 9, mittels des Lichtstrahles 36 erlaubt. Alternativ kann der Griff 21 an der entsprechenden Stelle auch eine Öffnung für einen Durchtritt des Messstrahls aufweisen.

An der Strahllenkeinheit 10 sind im Beispiel mehrere Optiken vorgesehen, darunter eine Optik der Messkamera 52 sowie ein Objektivmodul 50 für die optische Distanzmessung mit einer Laseraussende- und -empfangsoptik 51 und mit Optiken der Lokalisierungskameras 53 und Beleuchtungsmitteln 54 der Zielauffindungsseinheit. Des weiteren weist optional die Strahllenkeinheit 10 eine Optik einer Übersichtskamera des Lasertrackers 1 zur Bereitstellung von Übersichtsbildern für einen Benutzer auf.

In die Stütze 20, bzw. in einen der Holme ist als Teil der Distanzmesseinheit eine erste Strahlquelle 30 integriert, beispielsweise eine Helium-Neon-Laserquelle (HeNe-Laserquelle) . Eine Alternative zu einer HeNE-Laserquelle ist z.B. eine Laserdiode. Die Strahlquelle 30 kann dabei auch aus mehreren z.B. lasererzeugenden Teilen aufgebaut sein, die insgesamt eine einzige Laserstrahlung als erste Messstrahlung erzeugen. Ein eine Faser 31 aufweisendes Lichtleitersystem führt von dieser ersten Strahlquelle 30 durch die Welle 25 hindurch in die Strahllenkeinheit 10 bis zu einem Kollimator 34. Vorzugsweise ist das Lichtleitersystem polarisationserhaltend, und/oder die Faser 31 ist eine Single-Mode-Faser. Alternativ ist die Strahlquelle 30 in der Strahllenkeinheit 10 eingebaut und z.B. als SLED ausgebildet.

Die erste Strahlquelle 30 ist dabei dergestalt ausgebildet, dass die mit ihr erste Messstrahlung erzeugbar ist, die sich sowohl zur Distanzmessung auf retroreflektierende Ziele als auch auf diffus streuende Ziele und optional sich sowohl für Tracking (fortlaufende Zielverfolgung) als auch Scanning eignet, so dass also die erste Strahlquelle dual in beiden Messfunktionalitäten verwendbar ist. Hierzu kann die Strahlquelle 30 so ausgebildet sein, dass sich Messstrahlung unterschiedslos für beide Zielarten eignet, d.h. die Strahlquelle 30 in beiden Messfunktionalitäten gleich betrieben wird. Alternativ ist die Strahlquelle 30 in unterschiedlichen Betriebszuständen betreibbar, so dass beispielsweise die Leistung der ersten Messstrahlung veränderbar ist oder zwischen Dauerstrichbetrieb (continuous wave -cw) oder Pulsbetrieb umschaltbar ist, wodurch z.B. in der ersten Messfunktionalität mit einer geringen Leistung und/oder im Dauerstrichbetrieb gemessen wird und in der zweiten Messfunktionalität mit Laserpulsen hoher Leistung.

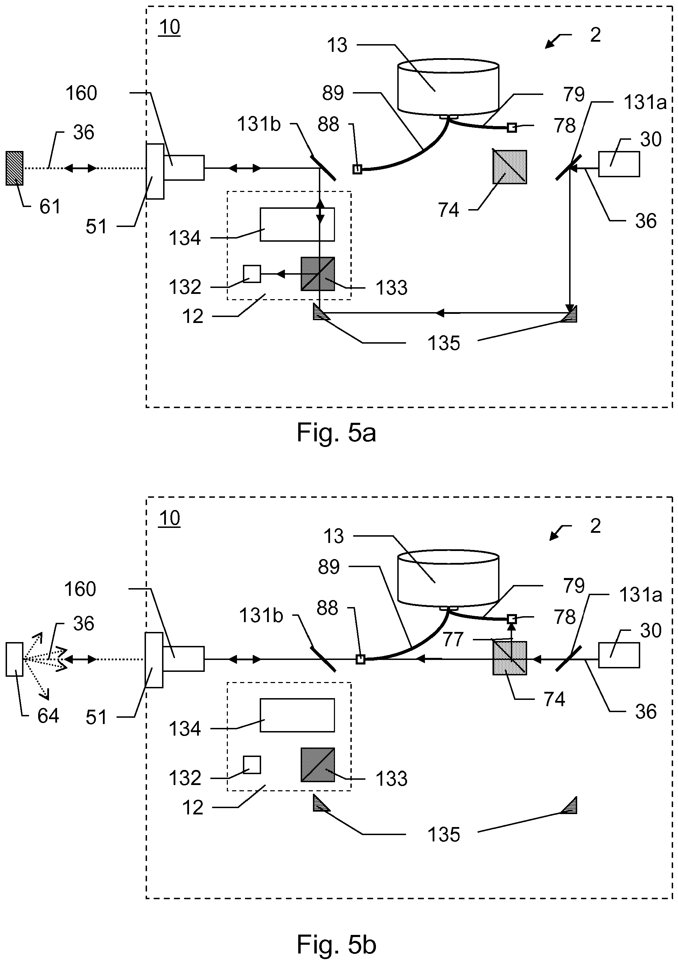

Die Figuren 5a und 5b zeigen einen beispielhaften optischen Aufbau eines erfindungsgemässen Lasertrackers, wobei die Figur 5a dessen Verwendung in der ersten Messfunktionalität zur Positionsbestimmung eines kooperativen, retroreflektierenden Ziels 61 zeigt und Figur 5b die Verwendung zur Positionsbestimmung eines diffus streuenden Ziels 64.

Die Strahllenkeinheit 10 weist eine optische Distanzmesseinheit 2 auf, welche in einer integrierten Bauweise ausgeführt ist und dementsprechend fix angeordnet eine erste Detektionseinheit 12, im Beispiel ausgebildet als Absolutdistanzmesseinheit (ADM), eine zweite Detektionseinheit 13, im Beispiel ausgebildet als Wave-Form-Digitizing-Einheit(WFD), und eine erste Strahlquelle 30, z. B. eine HeNe-Laserstrahlquelle oder eine Laserdiode, welche erste Messstrahlung 36 erzeugt, aufweist.

Die von der Strahlquelle 30 ausgehende erste Messstrahlung 36 trifft auf einen ersten veränderbaren Strahlteiler 131a, der z.B. mittels Anlegen einer Spannung zwischen den zwei Zuständen durchlässig und reflektierend umschaltbar ist. In der ersten Messfunktionalität nach Figur 5a ist er reflektierend, weshalb der Strahl 36 in der Figur 5a nach unten abgelenkt und mittels zweier Umlenkelemente 135 (z.B. Prismen) in die ADM geführt wird. Alternativ wird eine entsprechende Führung des Strahls 36 durch mechanische Veränderung des Strahlteilers 131a (z.B. Veränderung der Drehlage) oder mittels eines zusätzlichen optischen Elements wie einer Blende geregelt. Dort wird er durch einen polarisierenden Strahlteiler 133 und einen elektrooptischen Modulator 134 zu einem zweiten veränderbaren Strahlteiler 131b geführt, der den Strahl 36 durch die Aussende- und -empfangsoptik 51 auf den Reflektor 61 lenkt. Das rückkehrende Licht wird im ADM 13 durch den zweiten veränderbaren Strahlteiler 131b und den polarisierenden Strahlteiler 133 auf einen ADM-Detektor 132 geführt. Aus dem Messsignal des ADM-Detektors 132 wird die Distanz zum Ziel 61 bestimmt. In diesem Zusammenhang sind auch andere ADM-Anordnungen und Verfahren verwendbar, wie z. B. phasenbasierte oder nach dem Fizeau-Prinzip arbeitende Detektionseinheiten, einsetzbar.

In Figur 5b ist die Distanzmesseinheit 2 in der zweiten Messfunktionalität. Der erste veränderbare Strahlteiler 131a ist im durchlässigen Zustand, weshalb gepulste erste Messstrahlung 36 der Strahlquelle 30 nicht nach "unten" abgelenkt wird, sondern durch den ersten veränderbaren Strahlteiler 131a hindurch auf den teildurchlässigen Strahlteiler 74 trifft. Mittels des teildurchlässigen Strahlteilers 74 wird ein dieselben Messpulse wie der WFD-Strahl 36 aufweisender Referenzstrahl 77 abgespalten, der auf ein Referenzstrahl-Einkopplungselement 78 geleitet wird, das den Referenzstrahl 77 in einen ersten Lichtwellenleiter 79 einkoppelt, der zur WFD-Einheit 13 führt.

Der andere Teil des WFD-Strahls 36 wird durch den zweiten veränderbaren Strahlteiler 131b, der ebenso im durchlässigen Zustand ist, und die Laseraussende- und - empfangsoptik 51 auf das zu vermessenden Ziel 64 (Oberfläche eines diffus streuenden Messobjekts) gelenkt. Ein vom diffus streuenden Oberfläche des Messobjekts bzw. vom Ziel 64 remittierte Anteil der ersten Messstrahlung 36 gelangt durch die Laseraussende- und -empfangsoptik 51 wieder in die Strahllenkeinheit 10. Die remittierte Strahlung weist den Messpulsen entsprechende, aberentsprechend der Distanz zum Ziel 64 - zeitversetzte Zielpulse auf. In der Strahllenkeinheit 10 wird die remittierte Strahlung von einer Strahlempfangseinheit (nicht dargestellt) gebündelt und durch den durchlässigen zweiten veränderbaren Strahlteiler 131b hindurch und gegebenenfalls durch weitere, hier nicht dargestellte optische Mittel auf eine Einkoppelungseinheit 88 gelenkt, die die remittierte Strahlung in einen zweiten Lichtwellenleiter 89 einkoppelt, der zur WFD-Einheit 13 bzw. deren Detektor führt. Vom Detektor werden sowohl der remittierte Anteil 81 des WFD-Strahls 76 und der Referenzstrahl 77 erfasst. Auf bekannte, als Waveform Digitizing bezeichnete Art und Weise werden die Pulse der remittierten Strahlung und des Referenzstrahls 77 digitalisiert. Die so digitalisierten Messpulse und Zielpulse werden miteinander verglichen, insbesondere der zeitliche Abstand zwischen diesen, und so durch die Steuer- und Auswerteeinheit die Entfernung zum Zielpunkt 64 ermittelt.

Das Waveform Digitizing (WFD) basiert auf der Kombination von zwei in der Entfernungsmessung üblichen Grundprinzipien zur Signaldetektion. Das erste Grundprinzip basiert auf der Messsignaldetektion anhand der Schwellwertmethode und das zweite Grundprinzip auf der Signalabtastung mit nachgeschalteter Signalverarbeitung zur Identifikation und zeitlichen Lagebestimmung des Signals. Beide Ansätze werden parallel zur Signaldetektion angewendet, das heisst, dass ein empfangener Messpuls bzw. eine Signalstruktur der Messstrahlung mit beiden Verfahren detektiert wird, was zumeist Gleichzeitigkeit oder zumindest zeitliche Überlappung der Verfahren impliziert. Die Laufzeit und damit die Distanz zwischen einem von der Strahlquelle 30 ausgesandten Messpuls und einem Zielpuls (vom Zielpunkt 64 reflektierter und von der zweiten Detektionseinheit 13 detektierter Messpuls) folgen beispielsweise aus dem zeitlichen Abstand der Scheitelpunkte der beiden Pulse, wobei die Pulse ähnlich wie bei Phasenmessern abgetastet werden. Vorteilhaft sind auch Distanzen zu weiter entfernten Zielen ermittelbar als mit dem ADM 12. Die Kombination beider Prinzipien erlaubt eine Ausdehnung des Dynamikbereichs und die Nutzung zusätzlicher Informationen, wie z.B. der Pulsenergie, bei der Detektion des Signals und der Ableitung von Distanzinformationen. Da für elektrooptische Distanzmesser der Dynamikbereich der Empfangsschaltung zu maximieren ist, um möglichst viele Vermessungsarten abdecken zu können, bietet diese Kombination der Methoden wesentliche Vorteile. Optional kann eine Entfernungsmessung gleichzeitig mit der WFD 13 und dem ADM 12 durchgeführt werden, was zu einer Kalibrierung der WFD eingesetzt werden kann.

Im Beispiel nach den Figuren 5a und 5b wird also zumindest eines der in der Distanzmesseinheit 2 integrierten Elemente dual sowohl in der ersten Messfunktionalität als auch in der zweiten Messfunktionalität verwendet, andere Elemente hingegen singulär in der ersten oder in der zweiten Messfunktionalität. Im Einzelnen wird die erste Detektionseinheit 12 (ADM) singulär in der ersten Messfunktionalität verwendet, die zweite Detektionseinheit 13 (WFD) singulär in der zweiten Messfunktionalität und erfindungsgemäss die erste Strahlquelle 30 dual in beiden Messfunktionalitäten. Die erste Strahlquelle 30 erzeugt hierzu optional je nach Messfunktionalität unterschiedliche erste Messstrahlung 36, also z.B. für die zweite Messfunktionalität mit WFD gepulste Strahlung (wie beschrieben) und für die erste Messfunktionalität mit dem ADM mit Dauerstrichbetrieb oder z.B. durch entsprechende Mittel (beispielsweise breitbandige Laserquelle und Wellenlängenfilter je nach Messfunktionalität) erste Messstrahlung 36 unterschiedlicher Wellenlänge je nach Messfunktionalität, wobei die Strahlteiler 131a, 131b dann als wellenlängenabhängiger Strahlteiler ausgebildet sein kann. Wie in den Figuren 5a und 5b dargestellt, weist die Strahllenkeinheit 10 als weitere Option eine Komponente 160 auf, welche einfallendes Licht auftrennen und einen ersten Teil dieses Lichtes zur Lokalisierungskamera (nicht dargestellt) und einen zweiten zu einem Flächensensor als Feinanzielsensor (nicht dargestellt) ausgekoppelt. Die Lokalisierungskamera kann eine eigene Optik und zusätzlich einen Bildwandler aufweisen. Die Lokalisierungskamera weist dabei typischerweise einen Öffnungswinkel von rund 10° und eine Brennweite von beispielsweise 30 bis 50mm auf und dient zur Groblokalisierung von Messzielen. Zur Erfassung von reflektierenden Zielen kann die Strahllenkeinheit 10 eine Reflektorbeleuchtung (nicht dargestellt) mit einer bestimmten Beleuchtungswellenlänge aufweisen, welche einen Winkelbereich beleuchtet, der vorzugsweise mindestens so gross ist, wie der Öffnungswinkel der Übersichtskamera. Die Steuer- und Auswerteeinheit ist dergestalt ausgebildet, dass ein oder mehrere helle Lichtpunkte im Sichtbereich der Lokalisierungskamera detektiert werden, welche jeweils einem reflektierenden Ziel entsprechen. Daraus kann deren Position im Bild der Lokalisierungskamera und daraus wiederum eine Richtung zum Ziel, ermittelt werden, womit der Lasertracker bzw. die Strahllenkeinheit 10 und die Messstrahlung auf das Ziel ausrichtbar sind. Damit sind eine automatische Zielerfassung und ein "Lock-on", d. h. eine fortlaufende Verfolgung einesZiels realisierbar.

Der Lichtanteil für den Feinanzielsensor ist vorzugsweise ein Strahlenbündel von zurückkehrender Messstrahlung. Die Feinanzieleinheit kann auch eine eigene Optik aufweisen. Das Ausgangssignal des Flächenssensors wird dabei vermittels einer oder mehrerer photosensitiver Flächen erzeugt und hängt von der jeweiligen Position des Lichtschwerpunkts ab. Die Ermittlung der Position des Schwerpunkts des auftreffenden Lichtpunkts kann dabei sehr schnell (Nanosekundenbereich) und mit einer Nanometer-Auflösung erfolgen. Mittels des Feinanzielsensors wird eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld des Flächensensors vergleichsweise klein, d. h. korrespondierend zum Strahldurchmesser des Messstrahls, gewählt. Eine Erfassung mit dem Feinanzielsensor erfolgt koaxial zur Messachse, sodass die Erfassungsrichtung der Feinanzielung der Messrichtung entspricht. Die Anwendung des Trackings und der Feinanzielung erfolgt, nachdem der Messstrahl wie oben beschrieben zumindest grob auf ein retro-reflektierendes Ziel ausgerichtet worden ist (d. h. derart, dass das Ziel innerhalb des Lichtstrahl-Kegels liegt).

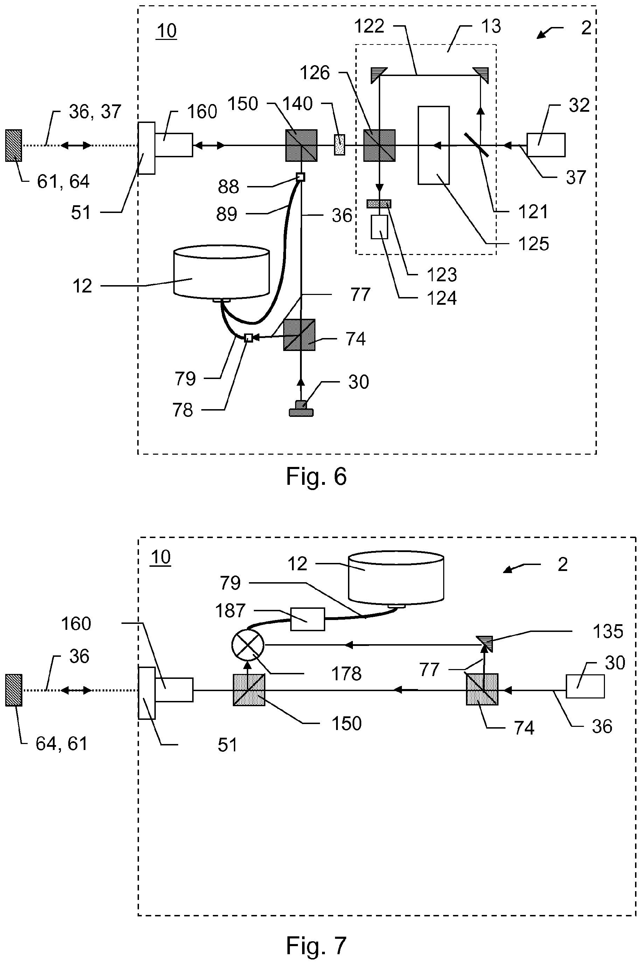

Die Figur 6 zeigt einen weiteren beispielhaften optischen Aufbau eines erfindungsgemässen Lasertrackers. Die Distanzmesseinheit 2, die in die Strahllenkeinheit 10 eingebaut ist, weist wie im Beispiel nach den Figuren 5a und 5b wiederum eine erste Detektionseinheit 12 und eine zweite Detektionseinheit 13 auf, wobei die zweite Detektionseinheit 13 ebenso singulär nur in einer der beiden Messfunktionalitäten verwendet wird. Im Unterschied zu den vorherigen Figuren ist die erste Detektionseinheit 12 jedoch nicht zur singulären Verwendung in einer der beiden Messfunktionalitäten ausgebildet, sondern die erste Detektionseinheit 12 wird dual in beiden Messfunktionalitäten verwendet. Somit erfolgt eine Positionsbestimmung in einer Messfunktionalität allein mit der ersten Detektionseinheit 12, in der anderen Messfunktionalität mit einer Kombination der ersten und zweiten Detektionseinheiten 12 und 13. Die zweite Detektionseinheit 13 wird also in einer der beiden Messfunktionalitäten zugeschaltet. Insbesondere ist die erste Detektionseinheit 12 ausgebildet zur Bestimmung einer absoluten Distanz und die zweite Detektionseinheit 13 zur Bestimmung einer relativen Distanz mit einer feineren Auflösung bzw. höheren Präzision als die erste Detektionseinheit 12.

Die erste Detektionseinheit 12 wird von der somit ebenfalls dual in beiden Messfunktionalitäten verwendeten ersten Strahlquelle 30 gespeist, die im Beispiel als Laserdiode oder Superlumineszenz-LED (SLED) ausgebildet ist. Die duale Verwendung der ersten Strahlquelle 30 ist eine Gemeinsamkeit der Ausführungsformen nach Figur 5a, 5b und 6. Gleichwohl wird die zweite Detektionseinheit 13 nicht von der ersten Strahlquelle 30 gespeist, sondern die zweite Detektionseinheit 13 wird von einer zweiten Strahlquelle 32 mit zweiter Messstrahlung 37 versorgt. Somit wird in einer der beiden Messfunktionalitäten die Distanz zum Ziel 61, 64 zusätzlich zur ersten Messstrahlung 36 anhand der zweiten Messstrahlung 37 bestimmt.

Im Beispiel nach Figur 6 ist die erste Detektionseinheit 12 als WFD-Einheit ausgebildet. Mit dieser wird in der zweiten Messfunktionalität ein diffus streuendes Ziel 64 vermessen. Der Strahlgang der ersten Messstrahlung 36 bzw. deren vom Ziel 64 reflektierten Anteile ist analog zum Beispiel nach Figur 5b, wobei vom Ziel 64 rückkehrende Strahlung 36 mittels eines Strahlteilers 150 und gegebenenfalls weiterer, hier nicht dargestellter optischer Mittel auf ein Einkoppelungselement 88 gelenkt wird. Der Strahlteiler 150 kann dabei z.B. wellenlängenabhängig sein und sich die Wellenlänge der ersten Messstrahlung 36 sich von der Wellenlänge der zweiten Messstrahlung 37 unterscheiden.

Die zweite Detektionseinheit 13 ist im Beispiel als Interferometereinheit ausgebildet, welches in der ersten Messfunktionalität (Messung zu einem Retroreflektor 61) zusätzlich zur WFD-Einheit eingesetzt wird, wobei wie in Figur 6 dargestellt das Ziel 61 mittels der zweiten Messstrahlung 37 der zweiten Strahlquelle 32 zusätzlich zur ersten Messstrahlung 36 vermessen wird. Die vom Ziel 61 reflektierte erste Messstrahlung 36 wird von der WFD-Einheit 12 ausgewertet, die reflektierte zweite Messstrahlung 37 von der Interferometereinheit 13, so dass insgesamt die Distanzbestimmung mittels der ersten Messstrahlung 36 und der zweiten Messstrahlung 37 erfolgt. In der ersten Messfunktionalität wird also die Distanz zum Ziel mittels beider Detektionseinheiten 12 und 13 bzw. mittels beider Messstrahlungen 36 und 37 bestimmt, wobei durch die Interferometereinheit 13 eine erhöhte Genauigkeit bereitgestellt bzw. ermöglicht wird, was z.B. beim zielverfolgenden Vermessen eines retroreflektierenden Ziels 61 vorteilhaft ist. Der Einsatz eines Interferometers erlaubt eine AIFM-Messung (= kombinierte Messungen mit ADM und IFM) auf bewegte Ziele. Das AIFM (= ADM + IFM) ermöglicht Messungen auf bewegte Ziele ("lock on the fly") durch Kenntnis und Berücksichtigung der bereits ohne bekannte Absolutdistanz durch das Interferometer gemessenen relativen Distanzänderungen während einer ADM-Messung.

Die Interferometereinheit 13 verwendet von der Strahlquelle 32 erzeugtes Licht, beispielsweise eine longitudinal monomodige Laserstrahlung mit grosser Kohärenzlänge (single frequency). Die erzeugte Lichtstrahlung wird durch einen Strahlteiler 121 in eine Referenzstrahlung 122 auf einem Referenzlichtpfad und in eine Messstrahlung 37 auf einem Messlichtpfad aufgeteilt. Der Messlichtpfad führt durch einen akustooptischen Modulator 125 und trifft zusammen mit dem Referenzlichtpfad auf einen polarisierenden Strahlteiler 126. Der polarisierende Strahlteiler 126 leitet die Messstrahlung 37 weiter zum, z.B. wellenlängenabhängigen, Strahlteiler 150, und lenkt das rückkehrende Messlicht zusammen mit dem Referenzlicht über einen Polarisationsfilter 123 zu einem Interferometerdetektor 124. Die Wirkungsweise einer solchen Interferometeranordnung 13 ist grundsätzlich bekannt und basiert auf dem Welleninterferenzprinzip. Es sind insbesondere auch andere Interferometeranordnungen und Verfahren verwendbar, bei denen sich die Messstrahlung durch beispielsweise den Strahlteiler 150 ein- und auskoppeln lässt. Ein Beispiel für ein solches Interferometer ist in der WO 03/062744 A1 beschrieben. Grundsätzlich sind auch andere Typen von Interferometern (z. B. Michelson mit Quadraturdetektion) einsetzbar.

Am Interferometerdetektor 124 wird eine Überlagerung der Referenzstrahlung 122 mit der an einem beweglichen Ziel 61 retroreflektierten und auf den Interferometerdetektor 124 geführten Messstrahlung 37 detektiert. Dabei kann die Intensität der bei der Überlagerung der beiden Strahlungen 37,122 entstehenden Interferenz fortlaufend (als Interferometerausgangsgrösse) erfasst werden. Das Ableiten der Interferometerausgangsgrösse basiert hierbei zumindest auf der erfassten Überlagerung, wobei die Interferometerausgangsgrösse von einer Entfernung zum Ziel abhängt.

Befindet sich das Ziel 61 in einer konstanten Entfernung zum Interferometerdetektor 124, so ist der während der beibehaltenen festen Entfernung zum Ziel 61 gemessene Intensitätswert konstant. Mit einer bezüglich einer durch die Messstrahlung 37 definierten optischen Achse relative Bewegung des Ziels 61 zum Vermessungsgerät (bzw. mit einer Bewegung des Aufbaus) verändert sich die Entfernung zwischen den beiden Komponenten und damit ein Gangunterschied zwischen der Referenzstrahlung 122 und der Messstrahlung 37 und dadurch die am Interferometerdetektor 124 messbare Intensität in Abhängigkeit der Entfernungsänderung. Mittels des Interferometerdetektors 124 können diese Intensitätsvariationen, insbesondere zeitaufgelöst, gemessen und erfasst (als Ausgangsgrössenverlauf) und für die Überprüfung der Richtigkeit einer solchen Entfernungsänderungsmessung ausgelesen und weiterverarbeitet werden. Das Erzeugen des zeitaufgelösten Ausgangsgrössenverlaufs erfolgt aus der abgeleiteten Interferometerausgangsgrösse, wobei ein Ermitteln der Entfernungsänderung basierend auf dem Ausgangsgrössenverlauf erfolgt.

Zur Überprüfung der Richtigkeit einer solchen Messung wird optional ein Bewegungsparameter aus den mit dem Interferometerdetektor 124 erfassten Intensitäten fortlaufend abgeleitet und dieser Parameter fortlaufend mit einem Bewegungskriterium verglichen. In Abhängigkeit des Vergleichs wird dann eine Information hinsichtlich der Verlässlichkeit der durchgeführten Messung ausgegeben.

Die Figur 7 zeigt eine weitere Ausführungsform des optischen Aufbaus eines erfindungsgemässen Lasertrackers. Alternativ zu den Ausführungsformen nach den Figuren 5a, 5b und 6 weist hier das Vermessungsgerät bzw. die Strahllenkeinheit 10 neben der ersten Detektoreinheit 12 keine zweite Detektoreinheit zur Distanzmessung auf. Stattdessen wird die erste Detektoreinheit 12 und die sie versorgende erste Strahlquelle 30 dual sowohl in der ersten als auch in der zweiten Messfunktionalität verwendet, dies in je unterschiedlicher Weise jeweils speziell auf die Erfordernisse der Vermessung eines retroreflektierenden Ziels oder der Vermessung eines diffus streuenden Ziels und/oder Tracken oder Scannen abgestimmt. Hierzu ist beispielsweise die Strahlquelle 30 in wenigstens zwei unterschiedlichen Betriebszuständen bzw. mit unterschiedlichen Messparametern betreibbar, also z.B. mit je unterschiedlicher Leistung, Pulsrate (bzw. cw- vs. Pulsbetrieb) und/oder Wellenlänge der erzeugten ersten Messstrahlung 36. Alternativ oder zusätzlich ist z.B. die erste Detektionseinheit 12 in wenigstens zwei verschiedenen Betriebszuständen bzw. unterschiedlichen Messparametern betreibbar, z.B. mit je unterschiedlicher Messrate und/oder Sensitivität. Mit anderen Worten wird also die gleiche Distanzmesseinheit 2 im Gesamten sowohl für kooperative als auch natürliche Ziele 61, 64 eingesetzt, wobei die Art der Vermessung an das jeweilige Ziel 61 oder 64 angepasst ist. Dadurch sind optimale Messergebnisse erzielbar bzw. bessere Messergebnisse im Vergleich zum alternativen unangepassten Einsatz der Distanzmesseinheit 2, bei dem ein mittelmässiger Kompromiss hinsichtlich Messparametern eingegangen werden muss, was jedoch für manche industrielle Vermessungsaufgaben ausreichend ist. Optional erfolgt dabei z.B. mittels empfangener reflektierter Messstrahlung 36 eine automatische Erkennung, um welche Art Ziel 61 oder 64 es sich handelt. Eine derartige Option ist dabei nicht auf die vorliegende Ausführungsform beschränkt, sondern bei allen anderen ebenso realisierbar.

Im vorliegenden Beispiel nach Figur 7 ist die erste Detektionseinheit 12 ausgebildet als FMCW-Einheit (frequency modulated continuous wave radar; frequenzmodulierten Dauerstrichradar), wodurch eine Entfernungsmessung mittels eines FMCW-Verfahrens ermöglicht wird. Insbesondere kann die Distanzmesseinheit 2 hierzu einen kohärenten Laserradar aufweisen, wie z. B. in der EP 1 869 397 B1 beschrieben.

Der in dieser Ausführungsform verwendete Ansatz zur Distanzmessung besteht darin, frequenzmodulierte elektromagnetische Strahlung, wie z. B. Licht, auf das zu vermessende Ziel auszusenden und nachfolgend ein oder mehrere Echos von rückstreuenden Objekten, idealerweise ausschliesslich vom zu vermessenden Ziel, zu empfangen. Nach dem Empfang wird das ggf. überlagerte Echosignal mit einem Mischsignal überlagert und dadurch die zu analysierende Frequenz des Signals vermindert, so dass vorrichtungsseitig nur ein geringerer Aufwand notwendig ist. Das Mischen kann dabei entweder als homodynes Verfahren mit dem gesendeten Signal oder als heterodynes Verfahren mit einem periodischen, insbesondere harmonischen, Signal bekannter Periode erfolgen. Die Mischung dient dazu, das empfangene Signal zu tieferen Frequenzen zu transformieren. Nachfolgend werden aus dem resultierenden Signal die Laufzeiten und damit - bei bekannter Ausbreitungsgeschwindigkeit der verwendeten Strahlung - die Distanzen zu den zu vermessenden Zielen bestimmt.

Die zur Umsetzung dieser Verfahren verwendeten Vorrichtungen nutzen üblicherweise einen Signalgenerator als Chirp-Generator, der einer modulierbaren Strahlungsquelle ein Signal aufprägt. Weiter werden ein Detektor bzw. Empfänger mit nachfolgendem Mischer, A/D-Wandler und digitalem Signal-Prozessor verwendet. Üblicherweise wird vom Signalgenerator als Messsignal ein linear frequenzmodulierter Chirp erzeugt. Das erfasste Echosignal der reflektierten Messstrahlung wird detektiert und mit dem Mischsignal. Das gemischte Signal wird auf einem endlichen Messintervall digitalisiert und abgespeichert. Aus der Frequenz- und ggf. der Phaseninformation dieses Signals werden die Laufzeiten bestimmt. Genauere Resultate können durch die Berücksichtigung der Phaseninformation erhalten werden. Ein frequenzmoduliertes Verfahren mit kontinuierlicher Emission (FMCW-Verfahren) zur Abstandsmessung mit elektromagnetischer Strahlung im Radarbereich ist aus der DE 196 10 970 A1 bekannt.

Im vorliegenden Beispiel weist die Distanzmesseinheit 2 die erste Strahlquelle 30 mit Ansteuermitteln zur Erzeugung einer frequenzmodulierten ersten Messstrahlung 36 mit kontinuierlich veränderlicher Frequenz auf. Der frequenzmodulierte Laserstrahl 36 wird zunächst auf einen ersten Strahlteiler 74 geleitet, wodurch ein Referenzstrahl 77 abgespalten wird, der mittels eines Umlenkelements 135 auf ein Mischerelement 178 geleitet wird.

Der andere Teil des frequenzmodulierten Laserstrahls 36 wird durch einen zweiten Strahlteiler 150 die Laseraussendeoptik 51 auf das zu Ziel 64. bzw 61 gelenkt. Vom Ziel 61, 64 remittierte Anteile des frequenzmodulierten Laserstrahls 36 gelangen teilweise durch die Laserempfangsoptik 51 wieder in die Strahllenkeinheit 10. In dieser wird die remittierte Strahlung mittels des zweiten Strahlteilers 150 auf das Mischerelement 178 geleitet, in welchem die remittierte Strahlung mit dem Referenzstrahl 177 homodyn oder heterodyn gemischt wird. Optional kann die remittierte Strahlung zuvor mittels eines HF-Vorverstärkers verstärkt worden sein.

Das entstandene Mischsignal 182 wird im vorliegenden Beispiel mittels einer optischen Faser 79 zur ersten Detektionseinheit 12 geführt, insbesondere kann das Mischsignal dabei auch über einen Tiefpassfilter 187 und einen Basisbandverstärker geleitet werden. Durch die Steuer- und Auswerteeinheit kann dann auf bekannte Art und Weise ein Frequenzunterschied, d. h. insbesondere ein Abstand zwischen den Frequenzen des Referenzstrahls 177 und der remittierten Strahlung, ermittelt werden und daraus die Entfernung zum Ziel 61 oder 64 berechnet werden.

Anstelle des Mischerelements 187 kann ein optisches Bezugssystem für den Referenzstrahl 177 verwendet werden. Ein solches optisches Bezugssystem ist beispielsweise in der EP 1 869 397 B1 beschrieben. Als Alternative zu einer FMCW-Einheit bzw. zu einem FMCW-basierten Messverfahren wird beispielsweise ein WFD-Verfahren oder ein auf einem Frequenzkamm basierenden oder durch einen Frequenzkamm unterstütztes Messen von Distanzen verwendet. Bei letzterer Alternative weist die Distanzmesseinheit eine erste Strahlquelle 30 auf, die zur Aussendung eines gepulsten, hochpräzise getimten Femtosekunden-Lasers ausgestaltet ist, der ein Trägersignal aufweist. Dadurch kann im Frequenzbereich ein sogenannter Frequenzkamm dünner scharfer Linien erzeugt werden, der für eine präzise optische Frequenzvermessung verwendet werden kann. Verschiedene Ansätze zum frequenzkammbasierten oder frequenzkammunterstützten Messen von Distanzen werden beispielsweise in dem Aufsatz "Frequency-Comb Based Approaches to Precision Ranging Laser Radar" (N. R. Newbury, T.-A. Liu, I. Coddington, F. Giorgetta, E. Baumann, W. C. Swann; National Institute of Standards and Technology) beschrieben.

Es versteht sich, dass diese dargestellten Figuren nur mögliche Ausführungsbeispiele schematisch darstellen. Die verschiedenen Ansätze können erfindungsgemäss ebenso miteinander sowie mit Systemen und Verfahren zum Vermessen von Oberflächen bzw. Objekten und mit Vermessungsgeräten des Stands der Technik kombiniert werden.

## Patentansprüche

1. Lasertracker (1) zur industriellen koordinativen Positionsbestimmung eines Ziels (61, 64), wobei der Lasertracker (1) mindestens aufweist
• eine Basis (40),
• eine Steuer- und Auswerteeinheit zur Datenverarbeitung und zur Steuerung des Lasertrackers (1),
• eine optische Distanzmesseinheit (2) mittels derer zur koordinativen Positionsbestimmung eine absolute Distanz zum Ziel (61, 64) bestimmbar ist, wobei die optische Distanzmesseinheit (2) mindestens folgende Elemente aufweist
∘ eine erste Strahlquelle (30), insbesondere eine Superlumineszenz-LED (SLED) oder Laserquelle, zur Erzeugung einer ersten Messstrahlung (36) und
∘ eine erste Detektionseinheit (12) zur Detektion empfangener reflektierter erster Messstrahlung (36),
• eine Strahllenkeinheit (10), die um zwei Achsen relativ zur Basis drehbar ist und eine Aussende- und -empfangsoptik (51) zum Aussenden der ersten Messstrahlung (36) auf das Ziel (61, 64) und zum Empfangen von reflektierter erster Messstrahlung (36) aufweist und
• Mittel zum Erfassen von Drehwinkeln der Strahllenkeinheit (10) relativ zur Basis (40),
**dadurch gekennzeichnet, dass**
die Steuer- und Auswerteeinheit und die optische Distanzmesseinheit (2) ausgebildet sind zur Durchführung einer ersten und einer zweiten Messfunktionalität, wozu wenigstens ein Element der Distanzmesseinheit (2) zur dualen Verwendung sowohl in der ersten als auch in der zweiten Messfunktionalität ausgebildet ist, wobei
• die Distanzmesseinheit (2) in einer integrierten Bauweise ausgeführt ist,
• die erste Messfunktionalität ausgebildet ist zur koordinativen Positionsbestimmung eines retroreflektierenden Ziels (61) und
• die zweite Messfunktionalität ausgebildet ist zur koordinativen Positionsbestimmung eines diffus streuenden Ziels (64),
so dass eine an die jeweilige Art des Ziels (61, 64) angepasste koordinative Positionsbestimmung durchführbar ist.

2. Lasertracker (1) nach Anspruch 1,
**dadurch gekennzeichnet, dass**
die erste Strahlquelle (30) ein Element zur dualen Verwendung ist, insbesondere wobei die erste Strahlquelle (30) zur dualen Verwendung in unterschiedlichen Betriebszuständen, im Speziellen hinsichtlich der Leistung und/oder Emissionsdauer der erzeugten ersten Messstrahlung (36), betreibbar ist.

3. Lasertracker (1) nach Anspruch 1 oder 2,
**dadurch gekennzeichnet, dass**
der Lasertracker (1) ausgebildet ist
• zur fortlaufenden Verfolgung eines sich bewegenden retroreflektierenden Ziels (61) in der ersten Messfunktionalität und/oder
• zur Durchführung einer Vielzahl von Distanzmessungen zu einer Vielzahl von diffus streuenden Zielen (64) auf der Oberfläche (92) eines Messobjektes (90) im Rahmen der zweiten Messfunktionalität, wobei die Steuer- und Auswerteeinheit derart ausgebildet ist, dass
∘ für die Vielzahl der Distanzmessungen die jeweils erfassten Drehwinkel mit der gemessenen Distanz verknüpft werden, sodass durch die Verknüpfung jeweils eine Punktposition des jeweiligen Zielpunkts (64) definiert ist, und
∘ eine eine Anzahl der Punktpositionen aufweisende Punktwolke erzeugbar ist.

4. Lasertracker (1) nach einem der vorhergehenden Ansprüche,
**dadurch gekennzeichnet, dass**
• die Steuer- und Auswerteeinheit eine Umschaltfunktionalität aufweist zur automatischen Auswahl, insbesondere anhand empfangener Messstrahlungsreflexion, der für das Ziel (61, 64) geeigneten oder optimalen Messfunktionalität und/oder
• der Lasertracker (1) eine optische Bilderfassungseinheit (52) mit einem zweidimensionalen, lichtempfindlichen Array aufweist, insbesondere eine Vario-Zoom-Messkamera, und die Steuer- und Auswerteeinheit eine Bildverarbeitungsfunktionalität aufweist, so dass durch Erfassen und Bildverarbeiten eines Bildes der Bilderfassungseinheit die Orientierung eines optische Markierungen (62) aufweisenden Messhilfsinstruments (60) bestimmbar ist und/oder
• der Lasertracker (1) eine Zielauffindungseinheit mit Beleuchtungsmittel (54) und Lokalisierungskamera (53) aufweist und/oder
• der Lasertracker (1) eine Übersichtskamera zur Bereitstellung von Übersichtsbildern aufweist und/oder
• der Lasertracker (1) eine Zielfeinanzielungs- und - verfolgungseinheit mit einer Feinanzielungsstrahlquelle und einem Feinanzielsensor, insbesondere einem CMOS-Sensor, CCD-Sensor oder positionssensitiven Sensor, zur Feinanzielung und/oder fortlaufenden Verfolgung eines retroreflektierenden Ziels (61) aufweist.

5. Lasertracker (1) nach einem der vorherigen Ansprüche,
**dadurch gekennzeichnet, dass**
die erste Detektionseinheit (12) zur Bestimmung von absoluten Distanzen ausgebildet ist, insbesondere wobei die erste Detektionseinheit ausgebildet ist als WFD-Einheit, FMCW-Einheit, Frequency-Comb-Einheit oder Absolutinterferometer, insbesondere frequenzscannendes Interferometer.

6. Lasertracker (1) nach einem der Ansprüche 2 bis 5,
**dadurch gekennzeichnet, dass**
neben der ersten Strahlquelle (30) wenigstens ein weiteres Element der Distanzmesseinheit (2) zur dualen Verwendung ausgebildet ist.

7. Lasertracker (1) nach Anspruch 6,
**dadurch gekennzeichnet, dass**
alle Elemente der Distanzmesseinheit (2) zur dualen Verwendung ausgebildet sind, insbesondere wobei wenigstens eines der Elemente zur dualen Verwendung in unterschiedlichen Betriebszuständen betreibbar ist.

8. Lasertracker (1) nach einem der Ansprüche 1 bis 6,
**dadurch gekennzeichnet, dass**
wenigstens ein Element der Distanzmesseinheit (2) zur singulären Verwendung in nur der ersten oder nur der zweiten Messfunktionalität ausgebildet ist.

9. Lasertracker (1) nach Anspruch 8,
**dadurch gekennzeichnet, dass**
ein Element zur singulären Verwendung eine zweite Detektionseinheit (13) ist, welche die Distanzmesseinheit (2) aufweist.

10. Lasertracker t (1) nach Anspruch 9,
**dadurch gekennzeichnet, dass**
die Distanzmesseinheit (2) dergestalt ausgebildet ist, dass die erste Strahlquelle (30) als ein Element zur dualen Verwendung dient, indem von ihr erzeugte erste Messstrahlung (36) von der ersten Detektionseinheit (12) als auch von der zweiten Detektionseinheit (13) detektierbar ist, insbesondere wobei
• in der ersten Messfunktionalität empfangene Messstrahlungsreflexion der ersten Messstrahlung (36) ausschliesslich von der ersten Detektionseinheit (12) detektiert wird und
• in der zweiten Messfunktionalität empfangene Messstrahlungsreflexion der ersten Messstrahlung (36) ausschliesslich von der zweiten Detektionseinheit (13) detektiert wird, und/oder
• die zweite Detektionseinheit (13) als Waveform-Digitizing-Einheit ausgebildet ist und/oder
• der Lasertracker (1) wenigstens ein veränderbares optisches Umlenkelement (131a, 131b) zur Beeinflussung des optischen Pfades der ersten Messstrahlung (36) aufweist.

11. Lasertracker (1) nach Anspruch 9,
**dadurch gekennzeichnet, dass**
die Distanzmesseinheit (2) als wenigstens ein weiteres Element zur singulären Verwendung eine zweite Strahlquelle (32) zur Erzeugung zweiter Messstrahlung (37) aufweist und entweder in der ersten oder der zweiten Messfunktionalität die Distanz zum Ziel (61,64) unter zusätzlicher Verwendung der zweiten Messstrahlung (37) bestimmt wird.

12. Lasertracker (1) nach Anspruch 11,
**dadurch gekennzeichnet, dass**
die zweite Detektionseinheit (13) zur Bestimmung von relativen Distanzen, insbesondere als Interferometereinheit, ausgebildet ist und zur singulären Verwendung in der ersten Messfunktionalität dient, wobei die von der zweiten Strahlquelle (32) erzeugte zweite Messstrahlung (37) von der zweiten Detektionseinheit (13) detektierbar ist.

13. Verfahren zum industriellen koordinativen Positionsbestimmen eines Ziels (61, 64) mit einem Lasertracker (1), wobei
der Lasertracker (1) mindestens aufweist
• eine Basis (40),
• eine Steuer- und Auswerteeinheit,
• eine Strahllenkeinheit (10) mit einer Aussende- und -empfangsoptik (51) zum Aussenden von Licht als Messstrahlung (36, 37) und zum Empfangen von Messstrahlungsreflexionen, und
• eine optische Distanzmesseinheit (2) mit mindestens folgenden Elementen
∘ einer ersten Strahlquelle (30), insbesondere einer Superlumineszenz-LED (SLED) oder Laserquelle, und
∘ einer ersten Detektionseinheit (12),
und wobei das Verfahren mindestens umfasst
• Erzeugen von erster Messstrahlung (36) durch die erste Strahlquelle (30),
• Aussenden von erster Messstrahlung (36) und Empfangen von vom Ziel (61, 64) reflektierter erster Messstrahlung (36) mittels der Aussende- und - empfangsoptik (51),
• Detektieren von empfangener reflektierter erster Messstrahlung (36),
• Bestimmen einer Distanz zum Ziel (61, 64) anhand detektierter Messstrahlung (36),
• Bestimmen von Drehwinkeln der Strahllenkeinheit (10) relativ zur Basis (40),
**dadurch gekennzeichnet, dass**
auf Abfrage jeweils anhand von bestimmten Drehwinkeln und wenigstens einer bestimmten Distanz
• in einer ersten Messfunktionalität ein koordinatives Positionsbestimmen eines retroreflektierenden Ziels (61) und
• in einer zweiten Messfunktionalität ein koordinatives Positionsbestimmen eines diffus streuenden Ziels (64)
erfolgt, wobei wenigstens ein Element der Distanzmesseinheit (2) dual sowohl in der ersten Messfunktionalität als auch in der zweiten Messfunktionalität verwendet wird, so dass eine an die jeweilige Art des Ziels (61, 64) angepasste koordinative Positionsbestimmung erfolgt.

14. Verfahren nach Anspruch 13,
**dadurch gekennzeichnet, dass**
• das Bestimmen einer Distanz zum Ziel (61, 64) sowohl in der ersten als auch in der zweiten Messfunktionalität unter Verwendung der ersten Messstrahlung (36) erfolgt und/oder
• im Rahmen des Verfahrens ein fortlaufendes Verfolgen des Ziels (61, 64) erfolgt.

15. Computerprogrammprodukt mit Programmcode, der auf einem maschinenlesbaren Träger gespeichert ist, zur Steuerung bzw. Durchführung des Verfahrens nach einem der Ansprüche 13 bis 14, insbesondere wenn das Programm auf einer als Steuer- und Auswerteeinheit eines Lasertrackers (1) nach einem der Ansprüche 1 bis 12 ausgebildeten elektronischen Datenverarbeitungseinheit ausgeführt wird.

## Claims

1. Laser tracker (1) for industrial coordinative position determination of a target (61, 64), wherein the laser tracker (1) at least comprises
• a base (40),
• a control and evaluation unit for dataprocessing and for control of the laser tracker (1),
• an optical distance measuring unit (2), by means of which an absolute distance to the target (61, 64) is determinable for coordinative position determination, wherein the optical distance measuring unit (2) comprises at least the following elements
∘ a first beam source (30), in particular a superluminescence LED (SLED) or laser source, for generating a first measurement radiation (36), and
∘ a first detection unit (12) for detecting received measurement radiation reflection,
• a beam directing unit (10), which is rotatable about two axes relative to the base and comprises an emission and reception optical unit (51) for emitting light as measurement radiation (36, 37) onto the target (61, 64) and for receiving reflected first measurement radiation,
• means for detecting rotation angles of the beam directing unit (10) relative to the base (40),
**characterized in that**
the control and evaluation unit and the optical distance measuring unit (2) are designed for implementing a first and a second measurement functionality, for which purpose at least one element of the distance measuring unit (2) is designed for dual use both in the first and in the second measurement functionality, wherein
• the distance measuring unit (2) is embodied in an integrated design,
• the first measurement functionality is designed for coordinative position determination of a retroreflective target (61), and
• the second measurement functionality is designed for coordinative position determination of a diffusely scattering target (64),
such that a coordinative position determination adapted to the respective specific type of target (61, 64) is implementable.

2. Laser tracker (1) according to Claim 1,
**characterized in that**
the first beam source (30) is an element for dual use, in particular wherein the first beam source (30) is operable for dual use in different operating states, specifically with regard to the power and/or emission duration of the generated first measurement radiation (36) .

3. Laser tracker (1) according to Claim 1 or 2,
**characterized in that**
the laser tracker (1) is designed
• for continuously tracking a moving retroreflective target (61) in the first measurement functionality, and/or
• for carrying out a multiplicity of distance measurements with respect to a multiplicity of diffusely scattering targets (64) on the surface (92) of a measurement object (90) in the context of the second measurement functionality, wherein the control and evaluation unit is designed in such a way that
∘ for the multiplicity of distance measurements the respectively detected rotation angles are combined with the measured distance, such that in each case a point position of the respective target point (64) is defined by the combination, and
∘ a point cloud comprising a number of the point positions is generatable.

4. Laser tracker (1) according to any one of the preceding claims,
**characterized in that**
• the control and evaluation unit comprises a switchover functionality for automatic selection, in particular on the basis of received measurement radiation reflection, of the measurement functionality that is suitable or optimal for the target (61, 64), and/or
• the laser tracker (1) comprises an optical image capture unit (52) with a two-dimensional, light-sensitive array, in particular a variable zoom measuring camera, and the control and evaluation unit comprises an image processing functionality, such that the orientation of an auxiliary measuring instrument (60) comprising optical markings (62) is determinable by capture and image processing of an image of the image capture unit, and/or
• the laser tracker (1) comprises a target finding unit with illumination means (54) and localization camera (53), and/or
• the laser tracker (1) comprises an overview camera for providing overview images, and/or
• the laser tracker (1) comprises a target fine targeting and tracking unit with a fine targeting beam source and a fine targeting sensor, in particular a CMOS sensor, CCD sensor or position-sensitive sensor, for fine targeting and/or continuous tracking of a retroreflective target (61) .

5. Laser tracker (1) according to any one of the preceding claims,
**characterized in that**
the first detection unit (12) is designed for determining absolute distances, in particular wherein the first detection unit is designed as WFD unit, FMCW unit, frequency comb unit or absolute interferometer, in particular frequency-scanning interferometer.

6. Laser tracker (1) according to any one of Claims 2 to 5,
**characterized in that**
alongside the first beam source (30) at least one further element of the distance measuring unit (2) is designed for dual use.

7. Laser tracker (1) according to Claim 6,
**characterized in that**
all elements of the distance measuring unit (2) are designed for dual use, in particular wherein at least one of the elements is operable for dual use in different operating states.

8. Laser tracker (1) according to any one of Claims 1 to 6,
**characterized in that**
at least one element of the distance measuring unit (2) is designed for singular use in only the first or only the second measurement functionality.

9. Laser tracker (1) according to Claim 8,
**characterized in that**
an element for singular use is a second detection unit (13) comprised by the distance measuring unit (2).

10. Laser tracker (1) according to Claim 9,
**characterized in that**
the distance measuring unit (2) is designed in such a way that the first beam source (30) serves as an element for dual use by virtue of the fact that first measurement radiation (36) generated by it is detectable by the first detection unit (12) and also by the second detection unit (13), in particular wherein
• measurement radiation reflection of the first measurement radiation (36) that is received in the first measurement functionality is detected exclusively by the first detection unit (12), and
• measurement radiation reflection of the first measurement radiation (36) that is received in the second measurement functionality is detected exclusively by the second detection unit (13),
and/or
• the second detection unit (13) is designed as a waveform digitizing unit, and/or
• the laser tracker (1) comprises at least one variable optical deflection element (131a, 131b) for influencing the optical path of the first measurement radiation (36).

11. Laser tracker (1) according to Claim 9,
**characterized in that**
the distance measuring unit (2) comprises, as at least one further element for singular use, a second beam source (32) for generating second measurement radiation (37), and the distance to the target (61, 64) is determined either in the first or in the second measurement functionality with the additional use of the second measurement radiation (37).

12. Laser tracker (1) according to Claim 11,
**characterized in that**
the second detection unit (13) is designed for determining relative distances, in particular as an interferometer unit, and serves for singular use in the first measurement functionality, wherein the second measurement radiation (37) generated by the second beam source (32) is detectable by the second detection unit (13) .

13. Method for industrial coordinative position determination of a target (61, 64) by means of a laser tracker (1), wherein
the laser tracker (1) at least comprises
• a base (40),
• a control and evaluation unit,
• a beam directing unit (10) having an emission and reception optical unit (51) for emitting light as measurement -radiation (36, 37) and for receiving measurement radiation reflections, and
• an optical distance measuring unit (2) having at least the following elements
∘ a first beam source (30), in particular a superluminescence LED (SLED) or laser source, and
∘ a first detection unit (12),
and wherein the method at least comprises
• generating first measurement radiation (36) by means of the first beam source (30),
• emitting first measurement radiation (36) and receiving first measurement radiation reflected from the target (61, 64) by means of the emission and reception optical unit (51),
• detecting received reflected first measurement radiation (36),
• determining a distance to the target (61, 64) on the basis of detected measurement radiation (36),
• determining rotation angles of the beam directing unit (10) relative to the base (40),
**characterized in that**
upon interrogation in each case on the basis of determined rotation angles and at least one determined distance
• in a first measurement functionality coordinative position determination of a retroreflective target (61) and
• in a second measurement functionality coordinative position determination of a diffusely scattering target (64)
are carried out, wherein at least one element of the distance measuring unit (2) is used in dual use both in the first measurement functionality and in the second measurement functionality, such that a coordinative position determination adapted to the respective specific type of target (61, 64) is carried out.

14. Method according to Claim 13,
**characterized in that**
• determining a distance to the target (61, 64) is carried out both in the first and in the second measurement functionality using the first measurement radiation (36), and/or
• continuous tracking of the target (61, 64) is carried out in the context of the method.

15. Computer program product having program code, stored on a machine-readable carrier, for controlling or carrying out the method according to any one of Claims 13 and 14, particularly if the program is executed on an electronic dataprocessing unit designed as a control and evaluation unit of a laser tracker (1) according to any one of Claims 1 to 12.

## Revendications

1. Appareil de suivi laser (1) destiné à la détermination de position coordonnée industrielle d'une cible (61, 64), dans lequel l'appareil de suivi laser (1) comporte au moins
• une base (40),
• une unité de commande et de traitement destinée au traitement des données et à la commande de l'appareil de suivi laser (1),
• une unité optique de mesure de distance (2) au moyen de laquelle une distance absolue jusqu'à la cible (61, 64) peut être déterminée pour la détermination de position coordonnée, dans lequel l'unité optique de mesure de distance (2) comporte au moins les éléments suivants
∘ une première source de rayonnement (30), en particulier une LED superluminescente (SLED) ou source laser, destinée à produire un premier rayonnement de mesure (36) et
∘ une première unité de détection (12) destinée à détecter le premier rayonnement de mesure (36) réfléchi et reçu,
• une unité de déviation de rayonnement (10), laquelle peut tourner autour de deux axes par rapport à la base et comporte une optique d'émission et de réception (51) destinée à émettre le premier rayonnement de mesure (36) sur la cible (61, 64) et à recevoir le premier rayonnement de mesure (36) réfléchi et
• des moyens destinés à saisir des angles de rotation de l'unité de déviation de rayonnement (10) par rapport à la base (40),
**caractérisé en ce que**
l'unité de commande et de traitement et l'unité optique de mesure de distance (2) sont réalisées pour mettre en œuvre une première et une deuxième fonctionnalité de mesure, où au moins un élément de l'unité de mesure de distance (2) est réalisé pour double utilisation aussi bien dans la première que dans la deuxième fonctionnalité de mesure, dans lequel
• l'unité de mesure de distance (2) est exécutée dans une conception intégrée,
• la première fonctionnalité de mesure est réalisée pour la détermination de position coordonnée d'une cible rétroréfléchissante (61) et
• la deuxième fonctionnalité de mesure est réalisée pour la détermination de position coordonnée d'une cible diffusante (64),
de sorte qu'une détermination de position coordonnée adaptée au type respectif de cible (61, 64) peut être mise en œuvre.

2. Appareil de suivi laser (1) selon la revendication 1,
**caractérisé en ce que**
la première source de rayonnement (30) est un élément à double utilisation, en particulier dans lequel la première source de rayonnement (30) peut fonctionner dans différents états de fonctionnement, spécialement en ce qui concerne la puissance et/ou la durée d'émission du premier rayonnement de mesure (36) produit, pour la double utilisation.

3. Appareil de suivi laser (1) selon la revendication 1 ou 2,
**caractérisé en ce que**
l'appareil de suivi laser (1) est réalisé
• pour le suivi en continu d'une cible rétroréfléchissante (61) en déplacement dans la première fonctionnalité de mesure et/ou
• pour la mise en œuvre d'une pluralité de mesures de distance par rapport à une pluralité de cibles diffusantes (64) sur la surface (92) d'un objet de mesure (90) dans le cadre de la deuxième fonctionnalité de mesure, dans lequel l'unité de commande et de traitement est réalisée de telle sorte que
∘ pour la pluralité de mesures de distance les angles de rotation respectivement saisis sont combinés avec la distance mesurée, de sorte qu'une position ponctuelle du point cible respectif (64) est respectivement définie par la combinaison, et
∘ un nuage de points comportant un nombre des positions ponctuelles peut être produit.

4. Appareil de suivi laser (1) selon l'une des revendications précédentes,
**caractérisé en ce que**
• l'unité de commande et de traitement comporte une fonctionnalité de commutation destinée à sélectionner automatiquement, en particulier à l'aide de la réflexion reçue du rayonnement de mesure, la fonctionnalité de mesure adaptée ou optimale pour la cible (61, 64) et/ou
• l'appareil de suivi laser (1) comporte une unité optique de capture d'image (52) dotée d'un réseau photosensible bidimensionnel, en particulier une caméra de mesure à zoom Vario, et l'unité de commande et de traitement comporte une fonctionnalité de traitement d'image, de sorte que par capture et traitement d'image d'une image de l'unité de capture d'image l'orientation d'un instrument de mesure (60) comportant des marquages optiques (62) peut être déterminée et/ou
• l'appareil de suivi laser (1) comporte une unité d'identification de cible dotée de moyens d'éclairage (54) et de caméras de localisation (53) et/ou
• l'appareil de suivi laser (1) comporte une caméra d'observation destinée à fournir des images d'observation et/ou
• l'appareil de suivi laser (1) comporte une unité de ciblage fin et de suivi dotée d'une source de rayonnement de ciblage fin et d'un capteur de ciblage fin, en particulier d'un capteur CMOS, d'un capteur CCD ou d'un capteur sensible à la position, destinée au ciblage fin et/ou au suivi en continu d'une cible rétroréfléchissante (61).

5. Appareil de suivi laser (1) selon l'une des revendications précédentes,
**caractérisé en ce que**
la première unité de détection (12) est réalisée pour la détermination de distances absolues, en particulier dans lequel la première unité de détection est réalisée comme unité WFD, unité FMCW, unité à peigne de fréquences ou interféromètre absolu, en particulier interféromètre à balayage de fréquences.

6. Appareil de suivi laser (1) selon l'une des revendications 2 à 5,
**caractérisé en ce que**
outre la première source de rayonnement (30), au moins un élément ultérieur de l'unité de mesure de distance (2) est réalisé pour la double utilisation.

7. Appareil de suivi laser (1) selon la revendication 6,
**caractérisé en ce que**
tous les éléments de l'unité de mesure de distance (2) sont réalisés pour la double utilisation, en particulier dans lequel au moins un des éléments peut fonctionner dans différents états de fonctionnement pour la double utilisation.

8. Appareil de suivi laser (1) selon l'une des revendications 1 à 6,
**caractérisé en ce que**
au moins un élément de l'unité de mesure de distance (2) est réalisé pour utilisation unique seulement dans la première ou seulement dans la deuxième fonctionnalité de mesure.

9. Appareil de suivi laser (1) selon la revendication 8,
**caractérisé en ce que**
un élément pour utilisation unique est une deuxième unité de détection (13), laquelle comporte l'unité de mesure de distance (2).

10. Appareil de suivi laser (1) selon la revendication 9,
**caractérisé en ce que**
l'unité de mesure de distance (2) est réalisée de telle façon que la première source de rayonnement (30) sert d'élément pour double utilisation, le premier rayonnement de mesure (36) produit par celle-ci est détectable par la première unité de détection (12) et également par la deuxième unité de détection (13), en particulier dans lequel
• dans la première fonctionnalité de mesure la réflexion reçue du premier rayonnement de mesure (36) est détectée exclusivement par la première unité de détection (12) et
• dans la deuxième fonctionnalité de mesure la réflexion reçue du premier rayonnement de mesure (36) est détectée exclusivement par la deuxième unité de détection (13), et/ou
• la deuxième unité de détection (13) est réalisée comme unité de numérisation de forme d'onde et/ou
• l'appareil de suivi laser (1) comporte au moins un élément de déviation (131a, 131b) optique variable destiné à influer sur le chemin optique du premier rayonnement de mesure (36).

11. Appareil de suivi laser (1) selon la revendication 9,
**caractérisé en ce que**
l'unité de mesure de distance (2) comporte, en tant qu'au moins un élément ultérieur pour utilisation unique, une deuxième source de rayonnement (32) destinée à produire le deuxième rayonnement de mesure (37) et la distance jusqu'à la cible (61, 64) est déterminée en utilisant en outre le deuxième rayonnement de mesure (37) ou bien dans la première ou bien dans la deuxième fonctionnalité de mesure.

12. Appareil de suivi laser (1) selon la revendication 11,
**caractérisé en ce que**
la deuxième unité de détection (13) est réalisée pour la détermination de distances relatives, en particulier comme unité d'interférométrie, et sert pour utilisation unique dans la première fonctionnalité de mesure, dans lequel le deuxième rayonnement de mesure (37) produit par la deuxième source de rayonnement (32) est détectable par la deuxième unité de détection (13).

13. Procédé de détermination de position coordonnée industrielle d'une cible (61, 64) avec un appareil de suivi laser (1), dans lequel
l'appareil de suivi laser (1) comporte au moins
• une base (40),
• une unité de commande et de traitement,
• une unité de déviation de rayonnement (10) dotée d'une optique d'émission et de réception (51) destinée à émettre de la lumière comme rayonnement de mesure (36, 37) et à recevoir des réflexions de rayonnement de mesure, et
• une unité optique de mesure de distance (2) dotée au moins des éléments suivants
∘ d'une première source de rayonnement (30), en particulier une LED superluminescente (SLED) ou source laser, et
∘ d'une première unité de détection (12),
et dans lequel le procédé comprend au moins
• production du premier rayonnement de mesure (36) par la première source de rayonnement (30),
• émission du premier rayonnement de mesure (36) et réception du premier rayonnement de mesure (36) réfléchi par la cible (61, 64) au moyen de l'optique d'émission et de réception (51),
• détection du premier rayonnement de mesure (36) réfléchi reçu, détermination d'une distance jusqu'à la cible (61, 64) à l'aide du rayonnement de mesure (36) détecté,
• détermination des angles de rotation de l'unité de déviation de rayonnement (10) par rapport à la base (40),
**caractérisé en ce que**
sur interrogation respectivement à l'aide des angles de rotation déterminés et d'au moins une distance déterminée
• dans une première fonctionnalité de mesure une détermination de position coordonnée d'une cible rétroréfléchissante (61) et
• dans une deuxième fonctionnalité de mesure une détermination de position coordonnée d'une cible diffusante (64)
s'effectue, dans lequel au moins un élément de l'unité de mesure de distance (2) est utilisé de manière double aussi bien dans la première fonctionnalité de mesure que dans la deuxième fonctionnalité de mesure, de sorte qu'une détermination de position coordonnée adaptée au type respectif de la cible (61, 64) s'effectue.

14. Procédé selon la revendication 13,
**caractérisé en ce que**
• la détermination d'une distance jusqu'à la cible (61, 64) s'effectue en utilisant le premier rayonnement de mesure (36) aussi bien dans la première que dans la deuxième fonctionnalité de mesure et/ou
• dans le cadre du procédé un suivi en continu de la cible (61, 64) s'effectue.

15. Produit-programme informatique doté de code de programmation, enregistré sur un support lisible par machine, destiné à commander ou exécuter le procédé selon l'une des revendications 13 à 14, en particulier lorsque le programme est exécuté sur une unité de traitement des données électronique conçue comme unité de commande et de traitement d'un appareil de suivi laser (1) selon l'une des revendications 1 à 12.
